(19) Europäisches Patentamt
European Patent Office
Office européen des brevets

(11) **EP 4 687 115 A1**

(12) **EUROPEAN PATENT APPLICATION**

(43) Date of publication:
**04.02.2026 Bulletin 2026/06**

(21) Application number: **25192529.3**

(22) Date of filing: **29.07.2025**

(51) International Patent Classification (IPC):
**G06V 10/774** *(2022.01)*  **G06V 10/82** *(2022.01)*
**G06V 20/40** *(2022.01)*  **G06V 10/776** *(2022.01)*
**G06V 20/70** *(2022.01)*

(52) Cooperative Patent Classification (CPC):
**G06V 20/46; G06V 10/774; G06V 10/776;
G06V 10/82; G06V 20/41; G06V 20/70**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **30.07.2024 US 202418789515**

(71) Applicant: **Microsoft Technology Licensing, LLC
Redmond, WA 98052 (US)**

(72) Inventors:
• **NIR, ORON
Redmond, 98052 (US)**
• **SHOHAM, TAL
Redmond, 98052 (US)**

(74) Representative: **CMS Cameron McKenna Nabarro
Olswang LLP
Cannon Place
78 Cannon Street
London EC4N 6AF (GB)**

(54) **CONTROLLING COMPLEXITY OF CAPTIONING THAT USES A VISION LANGUAGE MODEL**

(57) A vision language model ("VLM") generates text captions from video content. Innovations in controlling the complexity of captioning that uses a VLM are described. For example, a training tool updates a training set so that text captions are more concise, then fine-tunes a VLM using the updated training set. Or, as another example, a generative artificial intelligence model such as a VLM dynamically adjusts the probability of an end-of-sentence ("EOS") token so that the probability of the EOS token increases in successive iterations of output token generation, which tends to make generated text captions more concise. Or, as another example, a captioning tool identifies and ranks representative units (such as keyframes) of video, then selectively applies captioning (using a VLM) to representative units of the video based on ranking information. Together or individually, the innovations can improve the computational efficiency and accuracy of captioning that uses a VLM.

FIG. 5a  500

**Description**

**BACKGROUND**

In a computer system, a video analysis tool can extract meaningful information from video data, identifying objects (e.g., faces, persons, cars or other vehicles, logos, plants, animals, foods, or text or other characters), actions, events, and scenes. Video analysis can have various applications, such as video indexing, summarization of video, search across video, making recommendation about video, and video editing. However, video analysis is also computationally intensive. Video analysis typically involves processing large amounts of data, potentially evaluating complex and dynamic scenes. Moreover, video analysis often includes assessment of the semantic and contextual aspects of video content, which can be very difficult.

A vision language model ("VLM") can be used for video analysis. A VLM encodes video content into a vector representation and decodes the vector representation into a natural language description of the video content. This process can be called captioning of the video content. In many cases, a VLM can provide a rich, comprehensive description of video content, capturing the atmosphere and main narrative of the content in a way that a face recognition tool or other object detection tool cannot. For example, for an image that depicts objects such as people, a cake, balloons, presents, a sofa, and faces with different expressions, a VLM can generate a caption such as "A group of people are celebrating a birthday party in a living room."

In some scenarios, a customer retrieves video from one service or Web site, uses a VLM to generate captions for frames of the video, and provides the captioned frames to another service or Web site. Applying a VLM to video content can pose several technical challenges, especially for long-form video with multiple scenes and events. Typically, a VLM is implemented using a large neural network. Running the VLM on every frame of video in a sequence can be resource-intensive and time-consuming. Moreover, generating captions for every frame of video can result in generation of redundant or irrelevant text, especially when text captions are generated for frames that are not representative. Also, variations in the complexity of video content can lead to variations in the length of text captions. These variations in the length of text captions can create problems in terms of consistency and readability. In some cases, generation of long text captions can also lead to unexpected operational costs for a VLM.

**SUMMARY**

In summary, the detailed description presents innovations in controlling the complexity of captioning that uses a vision language model ("VLM"). With the innovations, a captioning tool can generate concise text captions for representative frames of video in a computationally effective manner. The innovations include fine-tuning a VLM after distillation of a training set so that the training set has text captions that are more concise, dynamically adjusting the probability of an end-of-sentence ("EOS") token in a generative AI model such as a VLM, and selectively applying captioning that uses a VLM to representative units (e.g., keyframes) of video. The innovations can be used in combination or separately. For example, a captioning tool can extract keyframes from video, rank the keyframes based on the number and quality of detected objects in the keyframes (or other quality metrics), and use a VLM to generate concise text captions for highly ranked keyframes, where the VLM has been fine-tuned to generate text captions that are short and informative for selected keyframes. In this way, the runtime and cost of video captioning can be reduced, and the accuracy of video captioning can be improved.

According to a first set of techniques and tools described herein, in a computing device that implements a VLM, a training tool receives an initial training set that includes images and initial text captions. Each of the initial text captions is associated with an image among the images. The training tool updates the initial training set. As part of updating the initial training set, the training tool distills the initial text captions into final text captions. A given final text caption is generated using a corresponding initial text caption. The given final text caption is more concise than the initial text caption but still associated with the image that is associated with the initial text caption. For example, the training tool generates the given final text caption by providing the initial text caption to a large language model ("LLM"), along with an instruction to shorten and summarize the initial text caption. Or, as another example, the training tool provides the image and initial text caption to a VLM (which can be the same VLM that will be fine-tuned or a different VLM), along with an instruction to shorten and summarize the initial text caption while describing the image. The training tool then adjusts the VLM using the updated training set, for example, as part of a retraining process to fine-tune the VLM. In this way, the VLM can be adjusted to generate text captions that are consistently readable and focused on relevant information. The retraining process can also reduce how long the VLM takes to generate text output, which saves time and resources.

According to a second set of techniques and tools described herein, in a computing device that implements a generative artificial intelligence ("AI") model, the generative AI model accepts input and produces input tokens that encode the input. For example, the generative AI model is a VLM that accepts input and produces (e.g., with a text encoder and visual encoder) input tokens that encode the input. A VLM is an example of a multi-modal model, as it accepts text input as well as visual input such as image input or video input. The generative AI model can instead be another type of multi-modal model, for example, one that accepts text input as well as input in another modality such as audio, or another type of generative AI model. Or, as another example, the generative AI model is an LLM that accepts input and produces (e.g., with a text encoder) input tokens that encode the input. The generative AI model produces (e.g., with a text decoder) a text response using the input tokens that encode the input. As part of producing the text response, the generative AI model performs multiple iterations of output token generation. The probability of an EOS token increases in successive iterations among the multiple iterations of output token generation. For example, in each of the multiple iterations of output token generation, the generative AI model increases the probability of the EOS token and produces one or more output tokens. Each of the output token(s) can be the EOS token or a text token representing one or more words. If the EOS token was produced in the iteration, the generative AI model completes the production of the text response. Otherwise (the EOS token was not produced in the iteration), the generative AI model continues in the next iteration of output token generation. In this way, the generative AI model can generate text captions that are more concise, which can improve consistency and readability. Using a probability of EOS token that dynamically increases can also reduce how long the generative AI model takes to generate text output, which saves time and resources. The generative AI model can produce only text output, or the generative AI model can produce output in another modality in addition to text output.

According to a third set of techniques and tools described herein, in a computing device that implements a captioning tool, the captioning tool identifies one or more representative units (e.g., keyframes) of video. For example, the captioning tool identifies a scene in the video and determines the representative unit(s) among multiple units of the scene. The captioning tool ranks the representative unit(s). For example, for one of the representative units, the captioning tool detects one or more objects (such as faces or persons) in the representative unit and determines a count and/or quality of the detected object(s). More generally, the captioning tool can determine one or more quality metrics for a representative unit, such as clarity of objects in the representative unit, prominence of objects in foreground of the representative unit, and quality of framing of objects in the representative unit. Based on results of the ranking the representative unit(s), the captioning tool selects one of the representative unit(s), provides the selected unit as input to a VLM, and receives a text caption for the selected unit as output from the VLM. The resulting text caption can, for example, subsequently be used in indexing of the video, summarization of the video, semantic search across the video, or determining a recommendation for the video. By focusing captioning operations on representative units of video, the captioning tool can significantly reduce resource consumption and time spent in the captioning operations, while also significantly reducing generation of text output that is redundant or irrelevant.

The innovations described herein can be implemented as part of a method, as part of a computer system (physical or virtual) configured to perform the method, or as part of a tangible computer-readable media storing computer-executable instructions for causing a processor system, when programmed thereby, to perform the method. The various innovations can be used in combination or separately. The innovations described herein include the innovations covered by the claims. This summary is provided to introduce a selection of concepts in a simplified form that are further described below in the detailed description. This summary is not intended to identify key features or essential features of the claimed subject matter, nor is it intended to be used to limit the scope of the claimed subject matter. The foregoing and other objects, features, and advantages of the invention will become more apparent from the following detailed description, which proceeds with reference to the accompanying figures and illustrates a number of examples. Examples may also be capable of other and different applications, and some details may be modified in various respects all without departing from the spirit and scope of the disclosed innovations.

**BRIEF DESCRIPTION OF THE DRAWINGS**

The following drawings illustrate some features of the disclosed innovations.

FIG. 1 is a diagram illustrating an example architecture for retraining a VLM after distillation of a training set so that the training set includes shorter text captions.

FIG. 2 is a diagram illustrating example architecture for selective application of captioning that uses a VLM.

FIG. 3a is a flowchart illustrating an example technique for fine-tuning a VLM after distillation of text captions. FIGS. 3b and 3c show example operations for different stages of the example technique of FIG. 3a.

FIG. 4a is a flowchart illustrating an example technique for limiting text output of a generative AI model by dynamically adjusting probability of an EOS token. FIG. 4b shows example operations for one stage of the example technique of FIG. 4a.

FIG. 5a is a flowchart illustrating an example technique for selectively applying captioning that uses a VLM. FIG. 5b shows example operations of the VLM used for captioning.

FIG. 6 is a diagram illustrating an example computer system in which some described embodiments can be implemented.

**DETAILED DESCRIPTION**

The detailed description presents innovations in controlling the complexity of captioning that uses a vision language model ("VLM"). With the innovations, a captioning tool can generate concise text captions for representative units of video in a computationally effective manner. The innovations include fine-tuning a VLM after distillation of a training set so that the training set has text captions that are more concise, dynamically adjusting the probability of an end-of-sentence ("EOS") token in a generative AI model such as a VLM, and selectively applying captioning that uses a VLM to representative units of video. Together or individually, the innovations can improve the computational efficiency and accuracy of captioning that uses a VLM.

**I. Fine-Tuning a VLM After Distillation of Text Captions.**

According to a first aspect of the innovations described herein, a training tool distills text captions in a training set and retrains a VLM using the updated training set. For example, during retraining, the training tool is provided with samples of image-caption pairs in the updated training set, which the training tool can use to determine how the VLM should generate text captions from images during inference. During runtime inference, the VLM can leverage patterns learned in the training tool (with reference to image-caption pairs in the updated training set) to generate text captions. Retraining of a VLM after distillation of text captions can reduce runtime and cost of video analysis in the cloud or an edge device, since the retraining tends to reduce the length of text captions generated by the VLM. Retraining of a VLM after distillation of text captions can also improve the accuracy and readability of the results of video analysis, since the retrained VLM tends to generate text captions that are more concise and informative.

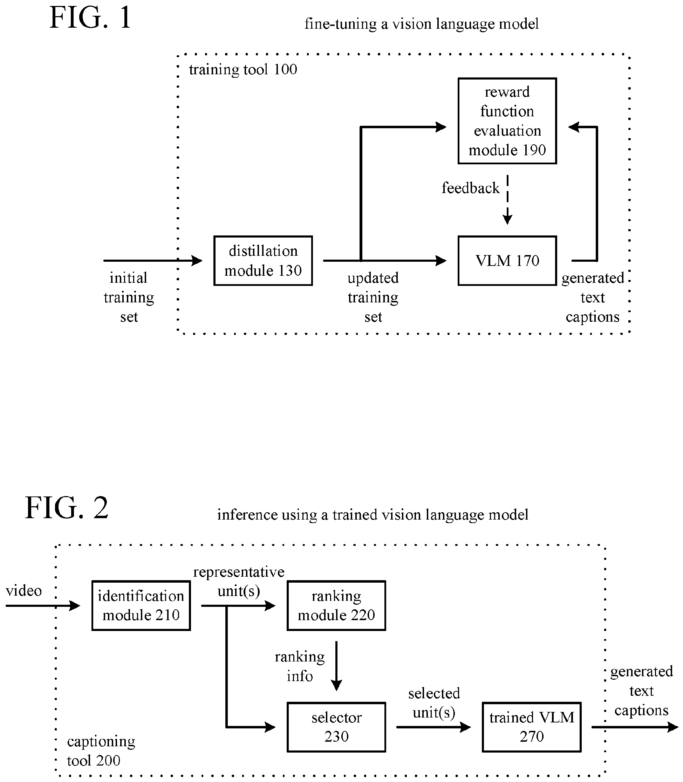

FIG. 1 shows an example architecture of a training tool (100) for retraining a VLM after distillation of text captions in a training set. The example architecture includes a distillation module (130), VLM (170), and reward function evaluation module (190). According to the approach shown in FIG. 1, the VLM (170) is retrained (fine-tuned) to generate text captions that are shorter and more informative. The goal of the retaining process is to tune the VLM (170) to, using shorter phrases, generate explanations or observations about video or image content.

The training tool (100) is configured to receive an initial training set that includes images and initial text captions. For purposes of the distillation process, the initial training set provides "ground truth" for the text captions. The initial training set can be different than the training set originally used to train the VLM (170), or the initial training set can be a subset of the training set originally used to train the VLM (170).

In the training tool (100), the distillation module (130) is configured to receive input from the initial training set and generate output - final text captions that are more concise - for an updated training set. To distill the initial text captions into the final text captions, the distillation module (130) can use a large language model ("LLM") or VLM, which can be the same as the VLM being trained or a different VLM. For example, the distillation module (130) is configured to provide an initial text caption to an LLM such as GPT2, GPT3, GPT4, GPT4v Turbo, BERT, or another LLM, along with an instruction to generate a text caption that is more concise (e.g., an instruction to the LLM to reword the initial text caption so that it is shorter, more succinct, or summarized). The distillation module (130) is also configured to receive, as output from the LLM, the final text caption. Or, as another example, the distillation module (130) is configured to provide an initial text caption and corresponding image (from an image-caption pair) to a VLM, along with an instruction to generate a text caption that is more concise but still descriptive of the image (e.g., an instruction to the VLM to reword the initial text caption so that it is shorter, more succinct, or summarized, but still descriptive of the image). The distillation module (130) is also configured to receive, as output from the VLM, the final text caption.

After the final text caption has been generated for the updated training set, the VLM (170) is configured to receive an image from the updated training set (from an image-caption pair in the updated training set), process the received image, and generate a test text caption from the image. The processing operations react to patterns of features in image content according to parameters of the VLM (170), which have initial values but may be modified during retraining. The VLM (170) can be implemented as described in Lin et al., "MoE-LLaVA: Mixture of Experts for Large Vision-Language Models" (2024). Alternatively, the VLM can be implemented as described in Radford et al., "Learning Transferable Visual Models From Natural Language Supervision" (2021); Alayrac et al., "Flamingo: a Visual Language Model for Few-Shot Learning" (2022); Wang et al., "SIMVLM: Simple Visual Language Model Pre-Training with Weak Supervision" (2022); Chen et al., "VisualGPT: Data-Efficient Adaptation of Pretrained Language Models for Image Captioning" (2022); Lu et al., "ViLBERT: Pretraining Task-Agnostic Visiolinguistic Representations for Vision-and-Language Tasks" (2019); or Gu et al., "Open-Vocabulary Object Detection Via Vision and Language Knowledge Distillation" (2022). Alternatively, the VLM (170) can be implemented in some other way.

Typically, the VLM (170) includes one or more text encoders, one or more visual encoders, and one or more text decoders. A text encoder is configured to receive text input and generate a vector representation (text encoding) of the text input. A visual encoder is configured to receive image input and generate a vector representation (visual encoding) of the image input. A text encoding and visual encoding can be combined (e.g., concatenated). A text decoder is configured to receive a vector representation of input (e.g., text encoding and/or visual encoding) and generate output text from the vector representation. A text encoder, visual encoder, and text decoder can be implemented in various ways in different VLM implementations.

The reward function evaluation module (190) is configured to accept, as inputs, a test text caption from the VLM (170) and a corresponding final text caption from a sample of the updated training set. The final text caption serves as a "ground truth" against which the result from the VLM (170) - that is, the test text caption - is measured.

The reward function evaluation module (190) is configured to evaluate differences between the test text caption and corresponding final text caption. The reward function evaluation module (190) is configured to produce, as output, feedback based on the differences. The differences between the final text caption and test text caption can be quantified according to a reward function (alternatively called a loss function). The reward function can incorporate any of one or more similarity metrics, such as Consensus-based Image Description Evaluation ("CIDEr") as described in Vedantam et al., "CIDEr: Consensus-Based Image Description Evaluation" (2015); Bilingual Evaluation Understudy ("BLEU") as described in Papineni et al., "BLEU: a Method for Automatic Evaluation of Machine Translation" (2002); Recall-Oriented Understudy for Gisting Evaluation ("ROUGE") as described in Lin, "ROUGE: A Package for Automatic Evaluation of Summaries" (2004); Metric for Evaluation of Translation with Explicit Ordering ("METEOR") as described in Banerjee et al., "METEOR: An Automatic Metric for MT Evaluation with Improved Correlation with Human Judgments" (2005); and/or another objective metric that quantifies text similarity.

The training tool (100) uses the feedback to adjust the VLM (170). In particular, the training tool (100) can use the feedback to adjust parameters of a text decoder of the VLM (170). Alternatively, the training tool can use the feedback to adjust parameters of a language model head or other component of the VLM (170). With the adjustments to the parameters, the training tool (100) causes the VLM (170) to focus on prominent information in the input image while generating less text. In the adjustment process, some parameters of the VLM (170) are frozen (not adjusted), while other parameters of the VLM (170) may be adjusted. For example, weights of a text encoder and visual encoder of the VLM (170) are frozen, while weights of a text decoder and/or language model head of the VLM (170) are adjusted. For the parameters of the VLM (170) that may be adjusted during the retraining process, adjustments can be confined to limited ranges (e.g., original values +/- x%, where x is a value such as 20, 30, or 50). By constraining changes to the parameters, the VLM (170) is "fine-tuned" without dramatically changing the VLM (170).

Retraining can repeat in retraining iterations for different batches (subsets) of input data in the updated training set, for an epoch (a pass through the data in the updated training set). The process of retraining the VLM (170) can continue for multiple epochs until the VLM (170) reaches a convergence threshold. For example, the convergence threshold can be used to determine whether parameters of the VLM (170) have stabilized (e.g., changes in parameters are below a threshold amount, which depends on implementation). Or, as another example, the convergence threshold can be used to determine whether differences between final text captions (ground truth) and test text captions from the VLM (170) are negligible (e.g., the value of the reward function has reached a threshold amount, which depends on implementation).

In general, with the feedback from the reward function evaluation module (190), the VLM (170) is exposed to samples of the updated training set during the retraining process. The VLM (170) can gradually learn to associate features found in the input images with features in the final text captions as "ground truth" for the input images. During subsequent runtime inference, the trained VLM can use the learned patterns to generate concise text captions.

In some example implementations, the reward function evaluation module (190) provides feedback to the VLM (170) according to a reward function for actor-critic reinforcement learning. For the VLM (170), an actor path provides a "player" or decision-maker during retraining. The actor selects an action (here, determining the output of the VLM (170)) based on a policy, as reflected in the configuration of the VLM (170). A critic path provides an "observer" (here, the reward function evaluation module (190)), who grades the performance of the actor. The critic assesses whether being in the state that results from the action selected by the actor is valuable or not valuable. The critic quantifies whether the action is valuable or not valuable using a reward function. The reward function can implement an objective measure of text similarity, as explained above. Based on the value of the reward function, the VLM (170) is adjusted. For example, if one or more weight values or bias values have been adjusted in an iteration of retraining the VLM (170), and the resulting value of the reward function increases, the retraining process keeps the adjusted values or increases the magnitude of the previous adjustments in the next iteration of retraining. On the other hand, if the resulting value of the reward function decreases, the retraining process reverses the previous adjustments (to weight value(s) and/or bias value(s)) or decreases the magnitude of the previous adjustments in the next iteration of retraining. In general, the retraining process continues until the VLM (170) reaches a convergence threshold.

Alternatively, the VLM (170) can be trained using another type of reinforcement learning. Or, as another alternative, the VLM (170) can be trained using supervised learning, unsupervised learning, or another variation of machine learning.

The training tool (100) can skip the adjustment of the VLM (170) for some inputs. For example, the training tool (100) aggregates the feedback for a current image-caption pair with other feedback (from previous image-caption pairs). In this case, the adjustment of the VLM (170) can use the aggregated feedback for the current image-caption pair after skipping the adjustment for the previous image-caption pairs, or the adjustment of the VLM (170) can be skipped for the current image-caption pair.

The VLM (170) can be trained for a specific type of video or image content. In that case, the VLM (170) is adapted to generate text captions for that type of video or image content. Different VLMs can be used for different types of content. Alternatively, a given VLM can be trained for various types of video or image content, such that the given VLM is adapted to perform captioning for any arbitrary type of video or image content.

### II. Limiting Text Output of a Generative AI Model by Adjusting Probability of EOS Token.

In some implementations, when a generative artificial intelligence ("AI") model generates text, the generative AI model aims for a capped length of generated text. A generative AI model can use an end-of-sentence ("EOS") token to indicate that generation of additional text should stop - for example, instructing a text decoder to stop generating more output tokens. According to a second aspect of the innovations described herein, a generative AI model dynamically adjusts the probability of an EOS token in successive iterations of output token generation. For example, in successive iterations of output token generation, the generative AI model increases the prior probability that the next token to be generated is the EOS token. Dynamically increasing the probability of the EOS token, as generation of text progresses through successive iterations of output token generation, makes it more likely for the generative AI model to end a text response in the successive iterations. Dynamically increasing the probability of the EOS token can reduce runtime and cost of text generation, since the adjustment tends to reduce the length of text generated by the generative AI model. Dynamically increasing the probability of the EOS token can also improve the accuracy and readability of the results of text generation, since the generated text captions tend to be more concise and informative.

The generative AI model that dynamically adjusts the probability of the EOS token can be a VLM, LLM, or other type of generative AI model that produces text output. For example, the generative AI model, with modification to how probability of EOS token is handled, can be a VLM implemented as described in Lin et al., "MoE-LLaVA: Mixture of Experts for Large Vision-Language Models" (2024) or another VLM reference listed in the previous section. Or, as another example, the generative AI model, with modification to how probability of EOS token is handled, can be an LLM such as GPT2, GPT3, GPT4, GPT4v Turbo, BERT, or another LLM.

In general, a text decoder towards the end of the text generation pipeline of the generative AI model (e.g., VLM, LLM) evaluates probability values for a next token. In some example implementations, the text decoder generates one token in an iteration of output token generation. In other example implementations, the text decoder generates multiple tokens (e.g., two tokens or four tokens) in an iteration of output token generation. In any case, the generative AI model dynamically increases the probability of the EOS token in successive iterations of output token generation. For details about example operations of a text decoder in an LLM, see, e.g., Radford et al., "Language Models Are Unsupervised Multitask Learners" (2019).

The probability of the EOS token can be adjusted as follows. The value $k$ is a target maximum count of tokens. The target maximum count $k$ is a "soft" constraint, in that the generative AI model can exceed the target maximum count if indicated by a linguistic learned posterior probability. The value $t$ is a count of iterations, starting from the target maximum count $k$ and decrementing in successive iterations. The prior probability of the EOS token being the next token to be generated is determined as:

$$P_{EoS}(s_1, \ldots, s_{k-t}) = 1 - \frac{1 - P_{EoS}(s_1, \ldots, s_{k-t-1})}{1+\alpha},$$

where $P_{EoS}(s_1, \ldots, s_{k-t})$ is the probability of the EOS token in the current iteration, $P_{EoS}(s_1, \ldots, s_{k-t-1})$ is the probability of the EOS token in the previous iteration, and $\alpha$ is a learnable hyper parameter. According to the equation, the hyper parameter $\alpha$ defines the rate of exponential decay for the complement probability of sampling any token other than the EOS token. For the equation, the range of the hyper parameter $\alpha$ is between 0 (exclusive) and 1 (exclusive).

Higher values of the hyper parameter $\alpha$ (such as 0.1, 0.2, or 0.3) make the probability of the EOS token increase more quickly in successive iterations, which tends to end the text generation process faster. Lower values of the hyper parameter $\alpha$ (such as 0.005, 0.01 or 0.02) make the probability of the EOS token increase more slowly in successive iterations, which tends to end the text generation process less quickly.

The hyper parameter $\alpha$ can be set as an implementation choice. In some example implementations, the value of the hyper parameter $\alpha$ is 0.01. Alternatively, the hyper parameter $\alpha$ can be set during training (or retraining) of the generative AI model. For example, when a training tool fine-tunes a VLM using an updated training set with distilled text captions (see section I), the hyper parameter $\alpha$ can be adjusted as a parameter during retraining. More generally, the hyper parameter $\alpha$ can be set during training of a generative AI model with a training set of image-caption pairs, where a reward function measures differences between an input text caption (ground truth) and a test text caption generated for the current value of the hyper parameter $\alpha$, and where feedback based on the reward function is used to adjust the hyper parameter $\alpha$. Thus, the hyper parameter $\alpha$ can start with a default value (such as 0.01), which is adjusted by back-propagation during the training (or retraining) process.

### III. Selectively Applying Captioning That Uses a VLM.

According to a third aspect of the innovations described herein, a captioning tool selectively applies captioning that uses a VLM. For example, the captioning tool identifies representative units of video, ranks the representative units, and uses a VLM to generate text captions for highly ranked units. In this way, the captioning tool can select units that are informative and relevant - depicting the main events for scenes of video - and generate text captions for the selected units. Selective application of captioning can reduce runtime and cost of video analysis in the cloud or an edge device, since it reduces the number of units of video for which the VLM generates text captions. Selective application of captioning can also improve the accuracy and readability of the results of video analysis, since text captions are generated only for representative units of video, which reduces generation of redundant or irrelevant text.

FIG. 2 shows an example architecture of a captioning tool (200) for selective application of captioning that uses a VLM. The example architecture includes an identification module (210), a ranking module (220), a selector (230), and a trained VLM (270). According to the approach shown in FIG. 2, the trained VLM (270) is selectively applied to generate informative text captions for representative units of video.

The captioning tool (200) receives video, which can be a sequence of frames of arbitrary duration. The video can include one or more scenes, with each scene including one or more shots. In some example implementations, a scene is composed of a series of temporally consecutive, semantically related shots, and a shot includes temporally consecutive frames from a camera.

In the captioning tool (200), the identification module (210) is configured to receive at least part of the video, identify one or more representative units from the video, and provide the representative unit(s) to the ranking module (220) and the selector (230). A unit of video can be a frame, slice, tile, or another type of unit of the video. In particular, a representative unit can be a keyframe of the video. A keyframe is a frame selected, from a series of frames of a video sequence, to provide an accurate, compact summary of the series of frames. Typically, a keyframe captures an essential moment or change in the video sequence. Depending on implementation, a keyframe can be identified based on one or more quality properties (e.g., aesthetic properties) of the frame. For example, the quality properties include contrast level in the frame and stability of video content in the frame, compared to surrounding frames. Alternatively, the quality properties include other and/or additional properties.

The identification module (210) can be configured to identify representative units of video on a scene-by-scene basis. For example, the captioning tool identifies a scene, in the video, that includes multiple units between a start time and end time, and determines the representative unit(s) among the units of the scene. To identify the scene, the captioning tool can be configured to use an ML model for scene change detection (e.g., based on color coherence or other visual cues), use metadata in a bitstream to identify the scene (e.g., with markers for frames that are boundaries between scenes), or use another approach. The identification unit can use scene detection services and keyframe determination services of a cloud service such as Azure AI Video Indexer. Alternatively, scene detection can be implemented according to another approach, such as an approach using another cloud service (e.g., Azure Media Services or Amazon Rekognition Video) or using PySceneDetect software. Representative frames can be determined as described in Hua et al., "Optimization-Based Automated Home Video Editing System" (2004) or using Katna software. Alternatively, representative frames can be determined according to another approach.

Representative units can be extracted from video and stored in separate files (e.g., image files). Alternatively, representative units can be stored in some other way (e.g., intermediate storage in memory).

The ranking module (220) is configured to rank the representative unit(s), thereby producing ranking information, and provide the ranking information to the selector (230). In some example implementations, for each of the representative unit(s), the ranking module (220) is configured to detect one or more objects (such as faces, persons, or another type of object) in the representative unit. Object detection can use object detection services and/or face detection services of a cloud service such as Azure AI Video Indexer, Azure Media Services, Amazon Rekognition Video, or Microsoft Stream. Alternatively, object detection can be implemented according to another approach. In some cases, an object detection service is adapted to detect a specific type of object (e.g., face, person, vehicle, logo, text or other characters), but in other cases an object detection service is adapted to detect multiple types of objects. The ranking module (220) is further configured to determine a count of the detected object(s), quality of the detected object(s), or both count and quality of the detected object(s). The count of detected objects and/or quality of detected objects can be determined based on results from object detection. For example, the results from object detection include a listing (e.g., in JSON format) of information about objects in a representative unit. For a given detected object, the information can include an object identifier, a type of the object, a display name for the object, and a confidence score for the object. The confidence score for the object can be used as a quality metric for the object. For example, an object that is small or blurry, when detected at all, may have a low confidence score, indicating low quality for purposes of ranking of representative units. Similarly, an object that is transient (appearing only briefly), partially occluded, or shown in sub-optimal lighting conditions (too dim or too much glare) may have a low confidence score, when detected at all, indicating low quality for purposes of ranking of representative units.

More generally, for each of the representative unit(s), the captioning tool can determine one or more quality metrics for the representative unit. The quality metric(s) can include one or more of clarity (sharpness) of objects in the representative unit, prominence of objects in foreground of the representative unit, and quality of framing of objects in the representative unit. Alternatively, other and/or additional quality metrics are considered when ranking representative unit(s). Before quality estimation, object detection can be used to detect one or more objects in the representative unit, with bounding boxes indicating boundaries around the respective objects. Within the bounding boxes, quality of the respective objects can be assessed (e.g., in terms of clarity, prominence in foreground, and framing). Or, as another alternative, the ranking module (220) can use a VLM to assess quality of the representative unit(s), prompting the VLM to estimate quality in terms of factors such as those described above.

The selector (230) is configured to receive the representative unit(s) from the identification module (210), receive the ranking information from the ranking module (220), select one or more of the representative unit(s) based on the ranking information, and provide the selected unit(s) of video to the trained VLM (270). For example, the selector (230) can select the top $n$ representative unit(s) for a scene, according to the ranking information, where $n$ is a value that depends on implementation (e.g., $n$ is 2, 3, or 5 units per scene of the video). Or, as another example, the selector (230) can select, according to the ranking information, the top $n$ representative unit(s) for a scene that have a ranking above a threshold amount. Or, as another example, the selector (230) can select any of the representative unit(s) having a ranking above a threshold amount (not limited by a count $n$). In this case, when the selector (230) receives a single representative unit from the identification module (210), the selector (230) can determine whether or not the ranking for that representative unit is above the threshold amount. When the selector (230) receives multiple representative units from the identification module (210), the selector (230) can determine which of the representative units, if any, have ranking above the threshold amount. Typically, the selected unit(s) are provided to the trained VLM (270) one at a time.

The trained VLM (270) is configured to receive, as input, selected unit(s) of video from the selector (230), generate text caption(s) for the selected unit(s) of video, and produce, as output, the text caption(s). The processing operations to generate a text caption react to patterns of features learned during training, as reflected in parameters of the trained VLM (270). The trained VLM (270) can be implemented as described in Lin et al., "MoE-LLaVA: Mixture of Experts for Large Vision-Language Models" (2024). Alternatively, the trained VLM (270) can be implemented as described in Radford et al., "Learning Transferable Visual Models From Natural Language Supervision" (2021); Alayrac et al., "Flamingo: a Visual Language Model for Few-Shot Learning" (2022); Wang et al., "SIMVLM: Simple Visual Language Model Pre-Training with Weak Supervision" (2022); Chen et al., "VisualGPT: Data-Efficient Adaptation of Pretrained Language Models for Image Captioning" (2022); Lu et al., "ViLBERT: Pretraining Task-Agnostic Visiolinguistic Representations for Vision-and-Language Tasks" (2019); or Gu et al., "Open-Vocabulary Object Detection Via Vision and Language Knowledge Distillation" (2022). Alternatively, the trained VLM (270) can be implemented in some other way.

The trained VLM (270) can include one or more text encoders, one or more visual encoders, and one or more text decoders. A text encoder, visual encoder, and text decoder can be implemented in various ways in different VLM implementations. For example, to generate a text caption for a selected unit of video, a text encoder of the trained VLM (270) is configured to accept a text prompt and produce tokens that encode the text prompt (a vector representation of the text prompt), and a visual encoder of the trained VLM (270) is configured to accept the selected unit and produce tokens that encode the selected unit (a vector representation of the selected unit). The tokens that encode the text prompt and the tokens that encode the selected unit can be combined (e.g., concatenated). A text decoder of the trained VLM (270) is configured to accept the tokens (that encode the text prompt and the tokens that encode the selected unit) and produce the text caption for the selected unit using the tokens. The captioning tool (200) can store the text captions generated by the trained VLM (270) in storage or memory.

In some implementations, the captioning tool (200) performs captioning operations in an offline manner, compared to capture of video. Generated text captions can be used when creating a library of captioned video for semantic search, when creating an index with metadata for the captioned video, when incorporating the captioned video into a recommendation system, or for another purpose. In offline operation, generation of text captions is not time-sensitive, but reduction in computational complexity and resource utilization, as well as reduction in redundant or irrelevant text, are still beneficial.

Alternatively, the captioning tool (200) can perform captioning operations in a near-real-time manner, compared to capture of video. Generated text captions can be used for analysis of video content as part of a surveillance system (with searching on generated text captions) or for another purpose. In near-real-time operation, generation of text captions is time-sensitive. Reduction in computational complexity and resource utilization, as well as reduction in redundant or irrelevant text, are especially beneficial.

Various operations of the pipeline shown in FIG. 2 can be performed in parallel for different units of video. Parallel processing can reduce overall latency and also utilize available hardware more completely. For example, while captioning operations are performed by the trained VLM (270) for representative unit(s) of a first scene, ranking operations can be performed by the ranking module (220) for representative unit(s) in a second scene (after the first scene), and operations to identify representative units in a third scene (after the second scene) can be performed by the identification module (210). Thus, different operations can be performed for different scenes of video in parallel. Or, as another example, while captioning operations are performed by the trained VLM (270) for a given representative unit (e.g., given keyframe), ranking operations can be performed by the ranking module (220) for representative unit(s) after the given representative unit, and operations to identify later representative units can be performed by the identification module (210). In this way, representative units that are closer in time (e.g., within a given scene) can be processed in parallel.

### IV. Example Techniques for Fine-Tuning a VLM After Distillation of Text Captions.

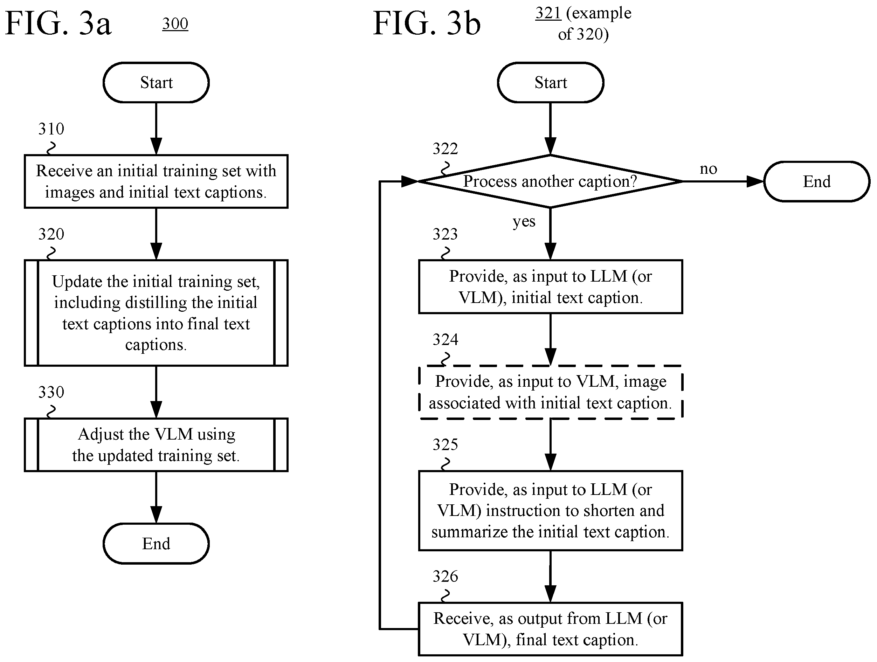

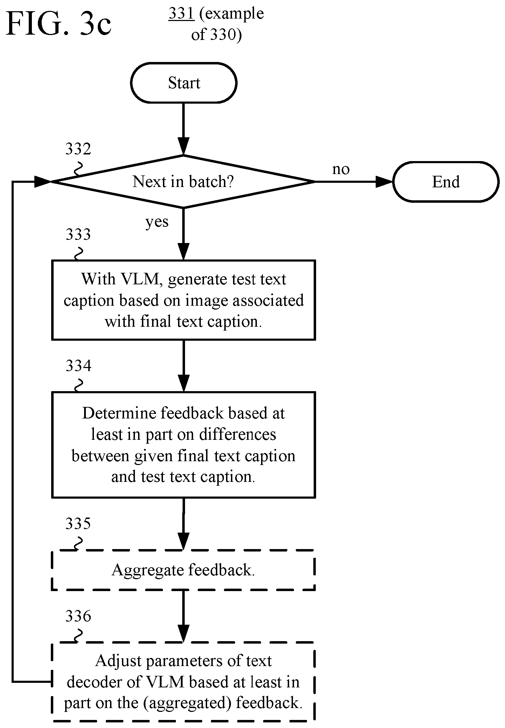

FIG. 3a shows an example technique (300) for fine-tuning a VLM after distillation of text captions. A training tool implemented in a computing device, as described with reference to FIG. 1 or otherwise, can perform the technique (300). FIG. 3b shows example operations for one stage of the example technique (300) of FIG. 3a, and FIG. 3c shows example operations for another stage of the example technique (300) of FIG. 3a.

To start, a training tool receives (310) an initial training set comprising images and initial text captions. For example, each of the images is a frame of video. Each of the initial text captions is associated with an image among the images. The images and initial text captions in the initial training set can be organized as samples of image-caption pairs or organized in some other way.

The training tool updates (320) the initial training set. As part of the updating, the training tool distills the initial text captions into final text captions. A given final text caption among the final text captions is generated using a corresponding initial text caption among the initial text captions. The given final text caption is typically more concise (that is shorter but at least roughly as informative) than the initial text caption. In any case, the given final text caption is associated with the image for the corresponding initial text caption. The images and final text captions in the updated training set can be organized as samples of image-caption pairs or organized in some other way.

FIG. 3b shows example operations (321) that the training tool can perform to distill initial text captions into final text captions. In the example operations, the training tool iteratively processes initial text captions of the initial training set. The training tool checks (322) whether there is another initial text caption to process. If so ("yes" from decision 322), the training tool provides (323), as input to an LLM (or VLM), an initial text caption from the initial training set. If a VLM is used to distill text captions, the training tool also provides (324), as input to the VLM, an image that is associated with the initial text caption. The training tool provides (325), as input to the LLM (or VLM), an instruction to shorten and summarize the initial text caption. For example, the training tool instructs the LLM (or VLM) to reword the initial text caption so that it is shorter, more succinct, or summarized. (If the instruction is provided to a VLM, the VLM is also instructed to describe the image.) The training tool receives (326), as output from the LLM (or VLM), a final text caption. The training tool then checks (322) whether to continue by processing another initial text captions. Alternatively, the training tool distills the initial text captions into final text captions in some other way.

The conciseness of the final text captions in the updated training set, compared to the initial text captions in the initial training set, can be measured in terms of word count. Typically, the final text captions have fewer words than the initial text captions. at least on average, even if an occasional final text caption is the same length or longer than its corresponding initial text caption.

With reference to FIG. 3a, the training tool adjusts (330) the VLM using the updated training set. FIG. 3c shows example operations (331) that the training tool can perform to adjust the VLM using the updated training set. The training tool performs the operations for a batch of samples from the updated training set, when a sample includes an image and a corresponding (final) text caption associated with the image.

To start, the training tool checks (332) whether there is another sample to process in the batch. If so ("yes" at decision 332), the training tool generates (333), with the VLM, a test text caption based on the image that is associated with the final text caption. The training tool determines (334) feedback based at least in part on differences between the given final text caption and the test text caption. The training tool can aggregate (335) the feedback with other feedback from previous samples. (Thus, the training tool need not adjust the VLM on a sample-by-sample basis.) The training tool can adjust (336) parameters (such as weights and/or bias values of a text decoder) of the VLM based at least in part on the feedback, which can be aggregated feedback. In some example implementations, since the training tool fine-tunes the VLM, the parameters (e.g., parameters of the text decoder) are adjusted within a range defined by constraints on changes to the parameters. Other parameters of the VLM are frozen - for example, as part of adjusting the VLM, the training tool does not adjust parameters of components of the VLM other than the text decoder. Alternatively, the training tool adjusts the VLM using the updated training set in some other way.

Fine-tuning a VLM after distillation of text captions (as described in this section) can be used in combination with a dynamic probability of an EOS token (as described in section V). For example, during the retraining process, the adjusting the VLM includes adjusting a hyper parameter that controls a rate of exponential growth factor for a probability of an EOS token.

Fine-tuning a VLM after distillation of text captions (as described in this section) can also be used in combination with selectively applying captioning that uses the VLM (as described in section VI). For example, a captioning tool performs operations during inference using a VLM after fine-tuning of the VLM. The captioning tool identifies representative unit(s) of video, ranks the representative unit(s), and, based on results of ranking the representative unit(s), selects a particular representative unit of the representative unit(s). The captioning tool provides the selected (particular representative) unit as input to the fine-tuned VLM and receives, as output from the fine-tuned VLM, a text caption for the selected unit.

The following table shows some of the innovative features described herein for fine-tuning a VLM after distillation of text captions.

| | | **Feature** |
|---|---|---|
| | A1 | In a computing device that implements a vision language model ("VLM"), a method of fine-tuning the VLM, the method comprising: receiving an initial training set comprising images and initial text captions, each of the initial text captions being associated with an image among the images; updating the initial training set, including distilling the initial text captions into final text captions, wherein a given final text caption among the final text captions is:<br>generated using a corresponding initial text caption among the initial text captions;<br>more concise than the corresponding initial text caption; and<br>associated with the image that is associated with the corresponding initial text caption; and<br>adjusting the VLM using the updated training set. |
| | A2 | The method of A1, wherein the distilling the initial text captions includes:<br>providing, as input to a large language model ("LLM"), the corresponding initial text caption; and<br>receiving, as output from the LLM, the given final text caption. |
| | A3 | The method of A2, further comprising providing, to the LLM, an instruction to shorten and summarize the corresponding initial text caption. |
| | A4 | The method of A1, wherein the distilling the initial text captions includes:<br>providing, as input to a second VLM, the corresponding initial text caption and the image that is associated with the corresponding initial text caption; and<br>receiving, as output from the second VLM, the given final text caption. |
| | A5 | The method of A4, further comprising providing, to the second VLM, an instruction to shorten and summarize the corresponding initial text caption while also describing the image that is associated with the corresponding initial text caption. |
| | A6 | The method of any one of A1 to A5, wherein the adjusting the VLM using the updated training set includes:<br>with the VLM, generating a test text caption based on the image that is associated with the given final text caption;<br>determining feedback based at least in part on differences between the given final text caption and the test text caption; and<br>adjusting parameters of the VLM based at least in part on the feedback. |
| | A7 | The method of A6, further comprising:<br>aggregating the feedback with other feedback, wherein the adjusting the VLM uses the aggregated feedback. |
| | A8 | The method of A6, wherein the parameters are adjusted within a range defined by constraints on changes to the parameters. |
| | A9 | The method of A6, wherein the parameters that are adjusted are parameters of a text decoder, and wherein the adjusting the VLM does not adjust parameters of components of the VLM other than the text decoder. |
| | A10 | The method of A9, wherein the parameters of the text decoder include weights and/or bias values. |
| | A11 | The method of any one of A1 to A10, wherein the adjusting the VLM |

(continued)

|  | Feature |
|---|---|
|  | further includes adjusting a hyper parameter that controls a rate of exponential growth factor for a probability of an end-of-sentence ("EOS") token. |
| A12 | The method of any one of A1 to A11, wherein each of the images is a frame of video. |
| A13 | The method of any one of A1 to A12, further comprising, during inference using the adjusted VLM:<br>identifying one or more representative units of video;<br>ranking the one or more representative units;<br>based on results of the ranking the one or more representative units, selecting a particular representative unit of the one or more representative units;<br>providing, as input to the adjusted VLM, the particular representative unit; and<br>receiving, as output from the adjusted VLM, a text caption for the particular representative unit |
| A14 | A computing device comprising a processor system and memory, wherein the computing device implements a training tool configured to perform operations of any one of A1 to A13. |
| A15 | One or more computer-readable media having stored therein computer-executable instructions for causing a processor system, when programmed thereby, to perform operations of any one of A1 to A13. |

### V. Example Techniques for Limiting Text Output of a Generative AI Model By Adjusting Probability of EOS Token.

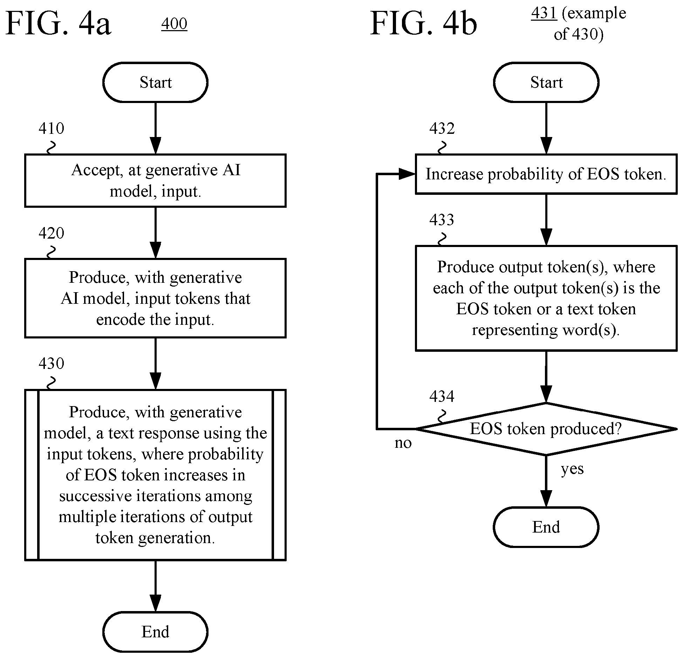

FIG. 4a shows an example technique (400) for limiting text output of a generative AI model by adjusting the probability of an EOS token. A generative AI model implemented in a computing device, such as a trained VLM as described with reference to FIG. 2 or otherwise, can perform the technique (400). FIG. 4b shows example operations for one stage of the example technique (400) of FIG. 4a.

To start, the generative AI model accepts (410) input and produces (420) input tokens that encode the input. The generative AI model can be a large language model ("LLM"), in which case a text encoder of the LLM accepts the input and produces the input tokens that encode the input. Alternatively, the generative model can be a VLM, in which case a visual encoder and/or text encoder of the VLM accept the input and produce the input tokens that encode the input. A VLM is an example of a multi-modal model, as it accepts text input as well as visual input such as image input or video input. Alternatively, the generative AI model can accept other and/or additional inputs. For example, the generative AI model can be another type of multi-modal model, such as one that accepts text input as well as input in another modality such as speech, or other type of generative AI model.

The generative AI model produces (430) a text response using the input tokens that encode the input. In producing the text response, the generative AI model performs multiple iterations of output token generation. A probability of an EOS token increases in successive iterations among the multiple iterations of output token generation. A text decoder of the generative AI model (LLM, VLM, or other type of generative AI model) can produce the text response. The generative AI model can also produce other output (not shown) in addition to producing the text response.

FIG. 4b shows example operations (431) that the generative AI model can perform to produce a text response using the input tokens that encode the input. To produce the text response, in successive iterations among the multiple iterations of output token generation, the generative AI model can increase (432) the probability of the EOS token and produce (433) one or more output tokens. Each of the output token(s) can be the EOS token or a text token representing one or more words. The generative AI model checks (434) if the EOS token was produced. If the EOS token was produced in an iteration, the generative AI model completes the production of the text response. Otherwise (the EOS token was not produced), the generative AI model continues in a next iteration of the multiple iterations of output token generation.

In some example implementations, the probability of the EOS token is a prior probability that increases in successive iterations according to an exponential growth factor. For example, the probability of the EOS token increases in successive iterations according to:

$$P_{EoS}(s_1, \ldots, s_{k-t}) = 1 - \frac{1 - P_{EoS}(s_1, \ldots, s_{k-t-1})}{1 + \propto}.$$

In this equation, the variable k represents a target limit on count of output tokens. For example, the value of k is 10, 20, 30, 50, or another value. The variable t represents a counter that decreases in the successive iterations. For example, the value of t starts at the value of k and decreases by 1 in successive iterations. $P_{EoS}(s_1, \ldots, s_{k-t})$ represents the probability

**EP 4 687 115 A1**

of the EOS token in a current iteration of the multiple iterations, and $P_{EoS}(s_1, \ldots, s_{k-t-1})$ represents the probability of the EOS token in a previous iteration of the multiple iterations. The parameter $\propto$ represents a hyper parameter that controls a rate of the exponential growth factor. For example, the hyper parameter that controls the rate of the exponential growth factor is in a range of (0, ..., 1).

The hyper parameter $\alpha$ can be set as an implementation choice. In some example implementations, the value of the hyper parameter $\alpha$ is 0.01. Alternatively, the hyper parameter $\propto$ can be set in a training process. In the training process, a training tool receives a training set comprising images and text captions. Each of the text captions is associated with an image among the images. The training tool adjusts the generative AI model using the training set. In particular, the training tool adjusts the hyper parameter that controls the rate of the exponential growth factor. Alternatively, the hyper parameter that controls the rate of the exponential growth factor can be set in some other way.

Limiting text output of a generative AI model (as described in this section) can be used in combination with fine-tuning a VLM after distillation of text captions (as described in section IV). In this case, a training tool trains the VLM in a training process. The training tool receives an initial training set that includes images and initial text captions. Each of the initial text captions is associated with an image among the images. The training tool updates the initial training set. In doing so, the training tool distills the initial text captions into final text captions. A given final text caption is generated using a corresponding initial text caption. Typically, the given final text caption is more concise (that is, shorter but at least roughly as informative) than the initial text caption. The given final text caption is associated with the image associated with the initial text caption. Finally, the training tool adjusts (fine-tunes) the VLM using the updated training set. As part of the training, the hyper parameter that controls the rate of the exponential growth factor can be set.

Limiting text output of a generative AI model (as described in this section) can also be used in combination with selectively applying captioning that uses a VLM (as described in section VI). For example, the generative AI model is a VLM that is part of a captioning tool, which performs operations during inference using the VLM. The captioning tool identifies representative unit(s) of video, ranks the representative unit(s), and, based on results of ranking the representative unit(s), selects a particular representative unit of the representative unit(s). The captioning tool provides the selected (particular representative) unit to the generative AI model (here, VLM), which increases the probability of an EOS token in successive iterations of output token generation, and receives a text response from the generative AI model (VLM).

The following table shows some of the innovative features described herein for limiting text output of a generative AI model.

| | | Feature |
|---|---|---|
| | B1 | In a computing device that implements a generative AI model, a method comprising: accepting, at the generative AI model, input; producing, with the generative AI model, input tokens that encode the input; and producing, with the generative AI model, a text response using the input tokens that encode the input, wherein the producing the text response includes multiple iterations of output token generation, and wherein a probability of an end-of-sentence ("EOS") token increases in successive iterations among the multiple iterations of output token generation. |
| | B2 | The method of B1, wherein the generative AI model is a large language model, and wherein a text encoder of the generative AI model accepts the input and produces the input tokens that encode the input. |
| | B3 | The method of B1, wherein the generative AI model is a vision language model, and wherein a visual encoder and/or text encoder of the generative AI model accept the input and produce the input tokens that encode the input. |
| | B4 | The method of any one of B1 to B3, wherein a text decoder of the generative AI model produces the text response. |
| | B5 | The method of any one of B1 to B4, wherein the producing the text response includes, in each of the multiple iterations of output token generation: increasing the probability of the EOS token; producing one or more output tokens, wherein each of the one or more output tokens is the EOS token or a text token representing one or more words; if the EOS token was produced, completing the producing the text response; and otherwise, the EOS token not having been produced, continuing in a next iteration among the multiple iterations of output token generation. |
| | B6 | The method of any one of B1 to B5, wherein the probability of the EOS token increases in the successive iterations according to an exponential growth factor. |

12

(continued)

| | | Feature |
|---|---|---|
| | B7 | The method of B6, wherein the probability of the EOS token increases in the successive iterations according to: $$P_{EoS}(s_1, \ldots, s_{k-t}) = 1 - \frac{1 - P_{EoS}(s_1, \ldots, s_{k-t-1})}{1 + \propto},$$ wherein $k$ represents a target limit on count of output tokens, $t$ represents a counter that decreases in the successive iterations, $P_{EoS}(s_1, \ldots, s_{k-t})$ represents the probability of the EOS token in a current iteration of the multiple iterations, $P_{EoS}(s_1, \ldots, s_{k-t-1})$ represents the probability of the EOS token in a previous iteration of the multiple iterations, and $\propto$ represents a hyper parameter that controls a rate of the exponential growth factor. |
| | B8 | The method of B7, wherein the hyper parameter that controls the rate of the exponential growth factor is in a range of (0, ..., 1). |
| | B9 | The method of B7, wherein the hyper parameter that controls the rate of the exponential growth factor has been set in a training process comprising: receiving a training set comprising images and text captions, each of the text captions being associated with an image among the images; and adjusting the generative AI model using the training set, including adjusting the hyper parameter that controls the rate of the exponential growth factor. |
| | B10 | The method of any one of B1 to B9, wherein the probability of the EOS token is a prior probability. |
| | B11 | The method of any one of B1 to B10, further comprising, during inference using the generative AI model: identifying one or more representative units of video; ranking the one or more representative units; and based on results of the ranking the one or more representative units, selecting a particular representative unit of the one or more representative units, wherein the particular representative unit is provided to the generative AI model as the input. |
| | B12 | The method of B1, wherein the generative AI model has been trained in a training process comprising: receiving an initial training set comprising images and initial text captions, each of the initial text captions being associated with an image among the images; updating the initial training set, including distilling the initial text captions into final text captions, wherein a given final text caption among the final text captions is: generated using a corresponding initial text caption among the initial text captions; more concise than the corresponding initial text caption; and associated with the image that is associated with the corresponding initial text caption; and adjusting the ML model using the updated training set. |
| | B13 | A computing device comprising a processor system and memory, wherein the computing device implements a generative AI model configured to perform operations of any one of B1 to B12. |
| | B14 | One or more computer-readable media having stored therein computer-executable instructions for causing a processor system, when programmed thereby, to perform operations of any one of B1 to B12. |

## VI. Example Techniques for Selectively Applying Captioning That Uses a VLM.

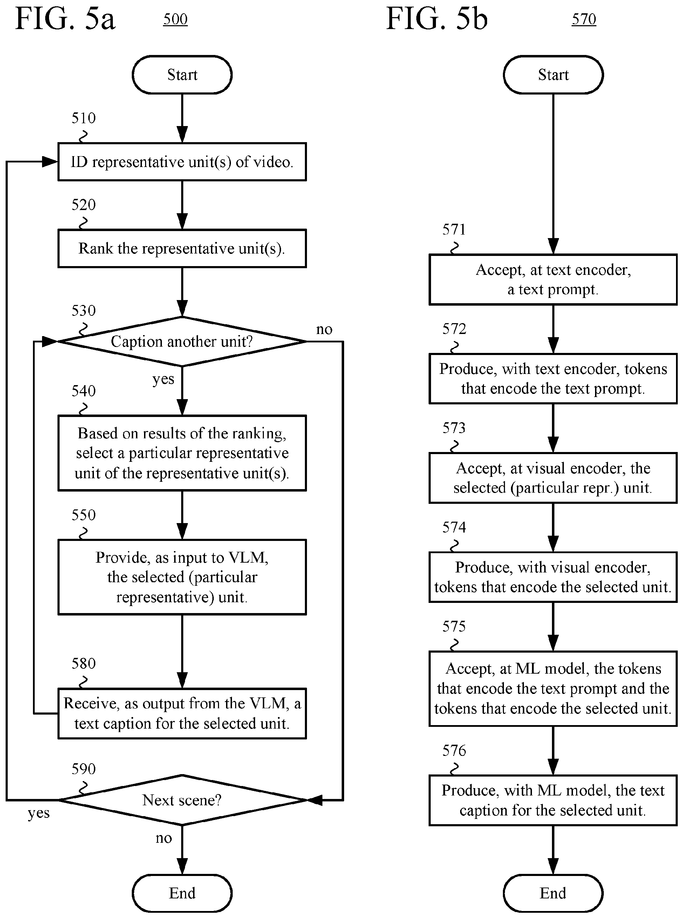

FIG. 5a shows an example technique (500) for selectively applying captioning that uses a VLM. A captioning tool implemented in a computing device, as described with reference to FIG. 2 or otherwise, can perform the technique (500). FIG. 5b shows example operations (570) of the VLM used for captioning.

With reference to FIG. 5a, to start, the captioning tool identifies (510) one or more representative units of video. In FIG. 5a, the representative unit(s) are in a scene of the video. For example, the captioning tool identifies a scene of the video, where the scene includes multiple units, and determines the representative unit(s) among the multiple units of the scene. To identify the scene, the captioning tool can use an ML model configured for scene change detection. Alternatively, the captioning tool can use metadata in a bitstream to identify the scene (e.g., with markers for frames that are boundaries between scenes) or use another approach to identify the scene.

In some example implementations, a representative unit is a keyframe of video. In this case, the representative unit(s) of the video (that is, the keyframe(s)) are determined based on quality properties of the respective units (frames) of the scene. The quality properties can include contrast level in a unit, stability of video content in a unit compared to surrounding units, and/or another quality property. Alternatively, a representative unit can be a random access point frame of the video that starts a scene or shot, a frame at a periodic interval of the video within a scene or shot, or a frame that is determined in some other way to represent a scene or shot within the scene. Also, a representative unit of video can be a slice, tile, or other unit of video different than a frame.

The captioning tool ranks (520) the representative unit(s). For example, for each of the representative unit(s), the captioning tool detects objects, if any, in the representative unit and determines a count of the detected objects (if any), quality of the detected objects (if any), or both count and quality of the detected objects (if any). The detected objects can be faces, persons, or another type of object. Alternatively, for each of the representative unit(s), the captioning tool determines a quality metric for the representative unit. The quality metric can incorporate clarity of objects in the representative unit, prominence of objects in foreground of the representative unit, and/or quality of framing of objects in the representative unit. Alternatively, other and/or additional quality metrics are considered when ranking the representative unit(s).

The captioning tool checks (530) whether to generate a text caption for one of the representative unit(s). If so, based on results of the ranking (520) the representative unit(s), the captioning tool selects (540) a particular representative unit of the representative unit(s). For example, the captioning tool selects the top ranked representative unit for which a text caption has not yet been generated. Or, as another example, the captioning tool selects the next representative unit, for which a text caption has not yet been generated, that has a ranking above a threshold amount. The captioning tool provides (550) the selected (particular representative) unit as input to a VLM.

With reference to FIG. 5b, the VLM can generate a text caption for a selected (particular representative) unit of video as follows. The VLM accepts (571), at a text encoder of the VLM, a text prompt and produces (572), with the text encoder of the VLM, tokens that encode the text prompt. The VLM also accepts (573), at a visual encoder of the VLM, the selected unit and produces (574), with the visual encoder of the VLM, tokens that encode the selected unit. The VLM then accepts (575), at a text decoder of the VLM, the tokens that encode the text prompt and the tokens that encode the selected unit. The VLM produces (576), with the text decoder of the VLM, the text caption for the selected unit using the tokens that encode the text prompt and the tokens that encode the selected unit. The text decoder of the VLM can be implemented as an ML model that includes a stack of multi-head self-attention layers and feed-forward neural network layers. Alternatively, the text decoder is implemented in some other way. In some example implementations, the architecture of the VLM implements a "mixture of expert" ("MoE") approach incorporating multiple expert models, where each of the expert models is a different constituent VLM. Alternatively, the architecture of the VLM implements a different approach, such as another approach described with reference to FIG. 2.

With reference to FIG. 5a, the captioning tool receives (580), as output from the VLM, a text caption for the selected unit. The text caption can be stored for use in indexing of the video, summarization of the video, semantic search across the video, determining a recommendation for the video, or another type of application. The captioning tool then checks (530) whether to generate a text caption for an additional unit of the representative unit(s). In this way, the captioning tool can repeat the selecting (540), providing (550) to the VLM, and receiving (580) from the VLM for multiple representative units of video, or the captioning tool can perform the selecting (540), providing (550) to the VLM, and receiving (580) from the VLM for a single representative unit of video.

For example, the captioning tool can select the top $n$ representative unit(s), according to the ranking information, where $n$ is a value that depends on implementation (e.g., $n$ is 2, 3, or 5 units). Or, as another example, the captioning tool can select, according to the ranking information, the top $n$ representative unit(s) that have a ranking above a threshold amount, which depends on implementation. Or, as another example, the captioning tool can select any of the representative unit(s) having a ranking above a threshold amount (not limited by a count $n$). Thus, when the captioning tool identifies a single representative unit, the captioning tool can determine whether or not the ranking for that representative unit is above the threshold amount. Or when the captioning tool identifies multiple representative units, the captioning tool can determine which of the representative units, if any, have ranking above the threshold amount.

After the captioning tool determines not to generate any more text captions ("no" at decision 530), the captioning tool determines (590) whether to continue generating text captions for a next scene of video. If so, the captioning tool continues by identifying (510) one or more representative units of video in the next scene.

Selective application of captioning (as described in this section) can be used in combination with a dynamic probability of an EOS token (as described in section V). For example, when the VLM produces the text caption, the VLM performs multiple iterations of output token generation, and the probability of the EOS token increases in successive iterations among the multiple iterations of output token generation.

Also, selective application of captioning (as described in this section) can be used in combination with (after) fine-tuning a VLM following distillation of text captions (as described in section IV). A training tool trains the VLM in a training process. The training tool receives an initial training set that includes images and initial text captions. Each of the initial text captions is associated with an image among the images. The training tool updates the initial training set. In doing so, the training tool distills the initial text captions into final text captions. A given final text caption among the final text captions is

generated using a corresponding initial text caption among the initial text captions. Also, the given final text caption is more concise (that is, shorter but at least roughly as informative) than the corresponding initial text caption. The given final text caption is associated with the image that is associated with the corresponding initial text caption. Finally, the training tool adjusts (fine-tunes) the VLM using the updated training set.

Described herein is a vision language model ("VLM") which generates text captions from video content. Innovations in controlling the complexity of captioning that uses a VLM are described. For example, a training tool updates a training set so that text captions are more concise, then fine-tunes a VLM using the updated training set. Or, as another example, a generative artificial intelligence model such as a VLM dynamically adjusts the probability of an end-of-sentence ("EOS") token so that the probability of the EOS token increases in successive iterations of output token generation, which tends to make generated text captions more concise. Or, as another example, a captioning tool identifies and ranks representative units (such as keyframes) of video, then selectively applies captioning (using a VLM) to representative units of the video based on ranking information. Together or individually, the innovations can improve the computational efficiency and accuracy of captioning that uses a VLM.

The following table shows some of the innovative features described herein for selectively applying captioning that uses a VLM.

| | | **Feature** |
|---|---|---|
| | C1 | In a computing device that implements a captioning tool, a method comprising: <br> identifying one or more representative units of video; <br> ranking the one or more representative units; <br> based on results of the ranking the one or more representative units, selecting a particular representative unit of the one or more representative units; <br> providing, as input to a vision language model ("VLM"), the particular representative unit; and <br> receiving, as output from the VLM, a text caption for the particular representative unit. |
| | C2 | The method of C1, wherein the identifying the one or more representative units includes: <br> identifying a scene of the video, the scene including multiple units; and <br> determining the one or more representative units among the multiple units of the scene. |
| | C3 | The method of C2, wherein the identifying the scene of the video uses: <br> a machine learning model configured for scene change detection; and/or <br> metadata in a bitstream. |
| | C4 | The method of C2, wherein each of the one or more representative units is a keyframe of the video. |
| | C5 | The method of C2, wherein the determining the one or more representative units is based on quality properties of the multiple units, respectively, of the scene, the quality properties including contrast level and stability of content compared to surrounding units. |
| | C6 | The method of any one of C1 to C5, wherein the ranking includes, for each of the one or more representative units: <br> detecting objects, if any, in the representative unit; and <br> determining a count and/or quality of the detected objects. |
| | C7 | The method of C6, wherein the objects are faces. |
| | C8 | The method of any one of C1 to C5, wherein the ranking includes, for each of the one or more representative units: <br> determining a quality metric for the representative unit. |
| | C9 | The method of C8, wherein the quality metric incorporates at least one of: <br> clarity of objects in the representative unit; <br> prominence of objects in foreground of the representative unit; and <br> quality of framing of objects in the representative unit. |
| | C10 | The method of any one of C1 to C9, wherein the VLM use an architecture with a mixture of expert models, and wherein each of the expert models is a different constituent VLM. |
| | C11 | The method of any one of C1 to C10, further comprising, with the VLM: <br> accepting, at a text encoder of the VLM, a text prompt; <br> producing, with the text encoder of the VLM, tokens that encode the text prompt; |

| | Feature |
|---|---|
| | accepting, at a visual encoder of the VLM, the particular representative unit; <br> producing, with the visual encoder of the VLM, tokens that encode the particular representative unit; <br> accepting, at a text decoder of the VLM, the tokens that encode the text prompt and the tokens that encode the particular representative unit; and <br> producing, with the text decoder of the VLM, the text caption for the particular representative unit using the tokens that encode the text prompt and the tokens that encode the particular representative unit. |
| C12 | The method of C11, wherein the text decoder is implemented as a machine learning ("ML") model, and wherein the ML model includes a stack of multi-head self-attention layers and feed-forward neural network layers. |
| C13 | The method of C11, wherein the producing the text caption includes multiple iterations of output token generation, and wherein a probability of an end-of-sentence token increases in successive iterations of the multiple iterations of output token generation. |
| C14 | The method of any one of C1 to C13, further comprising, for each of multiple additional units among the one or more representative units, repeating the selecting, the providing, and the receiving. |
| C15 | The method of any one of C1 to C14, further comprising: <br> storing the text caption; and <br> using the text caption in indexing of the video, summarization of the video, semantic search across the video, or determining a recommendation for the video. |
| C16 | The method of any one of C1 to C14, wherein the VLM has been trained in a training process comprising: <br> receiving an initial training set comprising images and initial text captions, each of the initial text captions being associated with an image among the images; <br> updating the initial training set, including distilling the initial text captions into final text captions, wherein a given final text caption among the final text captions is: <br> generated using a corresponding initial text caption among the initial text captions; <br> more concise than the corresponding initial text caption; and <br> associated with the image that is associated with the corresponding initial text caption; and <br> adjusting the VLM using the updated training set. |
| C17 | A computing device comprising a processor system and memory, wherein the computing device implements a captioning tool configured to perform operations of any one of C1 to C16. |
| C18 | One or more computer-readable media having stored therein computer-executable instructions for causing a processor system, when programmed thereby, to perform operations of any one of C1 to C16. |

**VII. Technical Benefits.**

Controlling the complexity of captioning that uses a VLM can provide various technical benefits. In general, with innovations described herein, a captioning tool can generate concise text captions for representative units of video in a computationally effective way, which can save time and computing resources in captioning operations.

A VLM can be retrained to generate text captions that are more concise by pre-processing a training set to make captions more concise while still being closely aligned with image content, and then fine-tuning the text decoder of the VLM to focus on important content and generate shorter text captions. Thus, a training tool can fine-tune a VLM after distillation of a training set so that the training set has text captions that are more concise. By retraining the VLM using the updated training set, the VLM can be adjusted to generate text captions that are consistently readable and focused on relevant information. Also, retraining a VLM to generate text captions that are more concise can reduce the runtime and computational cost of video analysis in the cloud or an edge device, as it reduces the length of the generated text captions.

As another example, a generative AI model (such as an LLM or VLM) can dynamically adjust the probability of an EOS token when generating a text response. In particular, by dynamically increasing the probability of the EOS token in successive iterations of output token generation, the generative AI model tends to generate text captions that are more concise. Dynamically increasing the probability of the EOS token can improve consistency and readability of text captions, due to generation of text captions that are more concise and informative. Also, dynamically increasing the probability of the EOS token can reduce how long the generative AI model takes to generate text output, reducing runtime and computational cost of video analysis in the cloud or an edge device.

As another example, a captioning tool can selectively apply captioning that uses a VLM to representative units of video. For example, the captioning tool can rank keyframes that may be input to the VLM based on number and quality of objects (such as faces) in the respective keyframes, then select the highest ranked keyframes to provide to the VLM. By focusing captioning operations on representative units of video, the captioning tool can significantly reduce resource consumption and time spent in the captioning operations in the cloud or an edge device, since the count of units to be processed by the VLM is reduced. At the same time, the captioning tool can significantly reduce generation of text output that is redundant or irrelevant - improving the accuracy of video analysis by selecting highly ranked representative units from video and generating informative captions for them.

## VIII. Example Computer Systems.

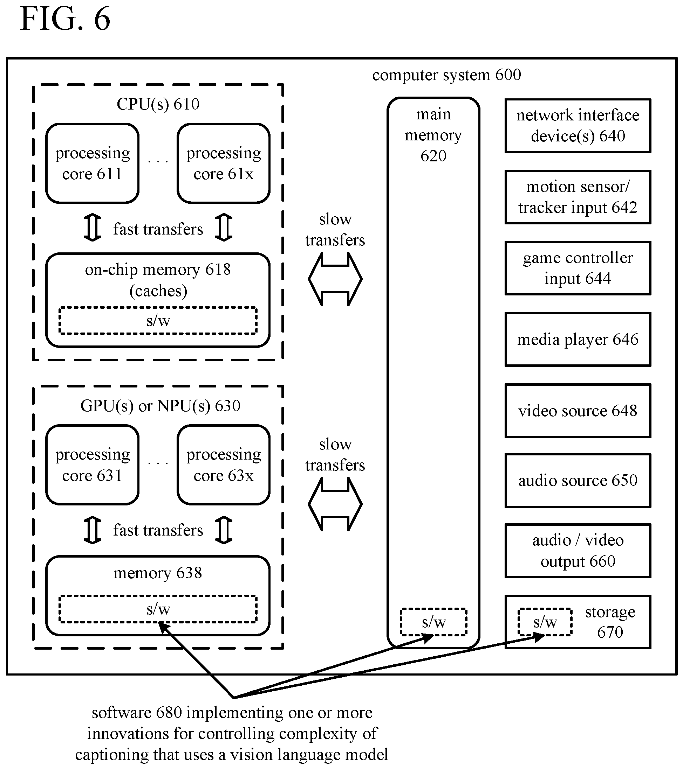

FIG. 6 illustrates a generalized example of a suitable computer system (600) in which several of the described innovations may be implemented. The innovations described herein relate to controlling complexity of captioning that uses a VLM. The computer system (600) is not intended to suggest any limitation as to scope of use or functionality, as the innovations may be implemented in diverse computer systems, including special-purpose computer systems.

With reference to FIG. 6, the computer system (600) includes one or more processing cores (611...61x) and local memory (618) of a central processing unit ("CPU")

(610) or multiple CPUs. The processing core(s) (611...61x) are, for example, processing cores on a single chip, and execute computer-executable instructions. The number of processing core(s) (611...61x) depends on implementation and can be, for example, 4 or 8. The local memory (618) may be volatile memory (e.g., registers, cache, random access memory ("RAM")), non-volatile memory (e.g., read-only memory ("ROM"), electrically erasable programmable ROM ("EEPROM"), flash memory), or some combination of the two, accessible by the respective processing core(s) (611...61x). Alternatively, the processing cores (611...61x) can be part of a system-on-a-chip ("SoC"), application-specific integrated circuit ("ASIC"), or other integrated circuit.

The local memory (618) can store software (680) implementing aspects of the innovations controlling complexity of captioning that uses a VLM, for operations performed by the respective processing core(s) (611...61x), in the form of computer-executable instructions. In FIG. 6, the local memory (618) is on-chip memory such as one or more caches, for which access operations, transfer operations, etc. with the processing core(s) (611...61x) are fast.

The computer system (600) also includes processing cores (631... 63x) and local memory (638) of a graphics processing unit ("GPU") or neural processing unit ("NPU") (630), or multiple GPUs or NPUs. The number of processing cores (631... 63x) of the GPU or NPU depends on implementation. For a GPU, the processing cores (631... 63x) are, for example, part of single-instruction, multiple data ("SIMD") units of the GPU. The SIMD width n, which depends on implementation, indicates the number of elements (sometimes called lanes) of a SIMD unit. For an NPU, the processing cores (631...63x) include, for example, specialized ML hardware blocks for operations such as matrix multiplication and convolution. The memory (638) may be volatile memory (e.g., registers, cache, RAM), non-volatile memory (e.g., ROM, EEPROM, flash memory), or some combination of the two, accessible by the respective processing cores (631... 63x). The memory (638) can store software (680) implementing aspects of the innovations for controlling complexity of captioning that uses a VLM, for operations performed by the respective processing cores (631...63x), in the form of computer-executable instructions such as shader code (for a GPU) or specialized code for ML hardware blocks (for an NPU).

The computer system (600) includes main memory (620), which may be volatile memory (e.g., RAM), non-volatile memory (e.g., ROM, EEPROM, flash memory), or some combination of the two, accessible by the processing core(s) (611...61x, 631...63x). The main memory (620) stores software (680) implementing aspects of the innovations for controlling complexity of captioning that uses a VLM, in the form of computer-executable instructions. In FIG. 6, the main memory (620) is off-chip memory, for which access operations, transfer operations, etc. with the processing cores (611...61x, 631...63x) are slower.

More generally, the term "processor" refers generically to any device that can process computer-executable instructions and may include a microprocessor, microcontroller, programmable logic device, digital signal processor, and/or other computational device. A processor may be a processing core of a CPU, other general-purpose unit, GPU, or NPU. A processor may also be a specific-purpose processor implemented using, for example, an ASIC or a field-programmable gate array ("FPGA"). A "processor system" is a set of one or more processors, which can be located together or distributed across a network.

The term "control logic" refers to a controller or, more generally, one or more processors, operable to process computer-executable instructions, determine outcomes, and generate outputs. Depending on implementation, control logic can be implemented by software executable on a CPU, by software controlling special-purpose hardware (e.g., a GPU, other graphics hardware, or an NPU), or by special-purpose hardware (e.g., in an ASIC).

The computer system (600) includes one or more network interface devices (640). The network interface device(s) (640) enable communication over a network to another computing entity (e.g., server, other computer system). The network interface device(s) (640) can support wired connections and/or wireless connections, for a wide-area network, local-area network, personal-area network, or other network. For example, the network interface device(s) can include one or more Wi-Fi® transceivers, an Ethernet® port, a cellular transceiver and/or another type of network interface device, along with associated drivers, software, etc. The network interface device(s) (640) convey information such as computer-executable instructions, audio or video input or output, or other data in a modulated data signal over network connection(s). A modulated data signal is a signal that has one or more of its characteristics set or changed in such a manner as to encode information in the signal. By way of example, the network connections can use an electrical, optical, RF, or other carrier.

The computer system (600) optionally includes a motion sensor/tracker input (642) for a motion sensor/tracker, which can track the movements of a user and objects around the user. For example, the motion sensor/tracker allows a user (e.g., player of a game) to interact with the computer system (600) through a natural user interface using gestures and spoken commands. The motion sensor/tracker can incorporate gesture recognition, facial recognition and/or voice recognition.

The computer system (600) optionally includes a game controller input (644), which accepts control signals from one or more game controllers, over a wired connection or wireless connection. The control signals can indicate user inputs from one or more directional pads, buttons, triggers and/or one or more joysticks of a game controller. The control signals can also indicate user inputs from a touchpad or touchscreen, gyroscope, accelerometer, angular rate sensor, magnetometer and/or other control or meter of a game controller.

The computer system (600) optionally includes a media player (646) and video source (648). The media player (646) can play DVDs, Blu-ray™ discs, other disc media and/or other formats of media. The video source (648) can be a camera input that accepts video input in analog or digital form from a video camera, which captures natural video. Alternatively, the video source (648) can be a screen capture module (e.g., a driver of an operating system, or software that interfaces with an operating system) that provides screen capture content as input. Or, as another alternative, the video source (648) can be a graphics engine that provides texture data for graphics in a computer-represented environment. Or, as another alternative, the video source (648) can be a video card, TV tuner card, or other video input that accepts input video in analog or digital form (e.g., from a cable input, High-Definition Multimedia Interface ("HDMI") input or other input).

An optional audio source (650) accepts audio input in analog or digital form from a microphone, which captures audio, or other audio input.

The computer system (600) optionally includes a video output (660), which provides video output to a display device. The video output (660) can be an HDMI output or other type of output. An optional audio output (660) provides audio output to one or more speakers.

The storage (670) may be removable or non-removable, and includes magnetic media (such as magnetic disks, magnetic tapes or cassettes), optical disk media and/or any other media which can be used to store information, and which can be accessed within the computer system (600). The storage (670) stores instructions for the software (680) implementing aspects of the innovations for controlling complexity of captioning that uses a VLM.

The computer system (600) may have additional features. For example, the computer system (600) includes one or more other input devices and/or one or more other output devices. The other input device(s) may be a touch input device such as a keyboard, mouse, pen, or trackball, a scanning device, or another device that provides input to the computer system (600). The other output device(s) may be a printer, CD-writer, or another device that provides output from the computer system (600).

An interconnection mechanism (not shown) such as a bus, controller, or network interconnects the components of the computer system (600). Typically, operating system software (not shown) provides an operating environment for other software executing in the computer system (600), and coordinates activities of the components of the computer system (600).

The computer system (600) of FIG. 6 is a physical computer system. A virtual machine can include components organized as shown in FIG. 6.

The term "application" or "program" refers to software such as any user-mode instructions to provide functionality. The software of the application (or program) can further include instructions for an operating system and/or device drivers. The software can be stored in associated memory. The software may be, for example, firmware. While it is contemplated that an appropriately programmed general-purpose computer or computing device may be used to execute such software, it is also contemplated that hard-wired circuitry or custom hardware (e.g., an ASIC) may be used in place of, or in combination with, software instructions. Thus, examples described herein are not limited to any specific combination of hardware and software.

The term "computer-readable medium" refers to any medium that participates in providing data (e.g., instructions) that may be read by a processor and accessed within a computing environment. A computer-readable medium may take many forms, including non-volatile media and volatile media. Non-volatile media include, for example, optical or magnetic disks and other persistent memory. Volatile media include dynamic random-access memory ("DRAM"). Common forms of computer-readable media include, for example, a solid-state drive, a flash drive, a hard disk, any other magnetic medium, a CD-ROM, DVD, any other optical medium, RAM, programmable read-only memory ("PROM"), erasable programmable read-only memory ("EPROM"), a USB memory stick, any other memory chip or cartridge, or any other medium from which a computer can read. The term "non-transitory computer-readable media" specifically excludes transitory propagating signals, carrier waves, and wave forms or other intangible or transitory media that may nevertheless be readable by a computer. The term "carrier wave" may refer to an electromagnetic wave modulated in amplitude or frequency to convey a signal.

The innovations can be described in the general context of computer-executable instructions being executed in a computer system on a target real or virtual processor. The computer-executable instructions can include instructions executable on processing cores of a general-purpose processor to provide functionality described herein, instructions executable to control a GPU, NPU, or special-purpose hardware to provide functionality described herein, instructions executable on processing cores of a GPU or NPU to provide functionality described herein, and/or instructions executable on processing cores of a special-purpose processor to provide functionality described herein. In some implementations, computer-executable instructions can be organized in program modules. Generally, program modules include routines, programs, libraries, objects, classes, components, data structures, etc. that perform particular tasks or implement particular abstract data types. The functionality of the program modules may be combined or split between program modules as desired in various embodiments. Computer-executable instructions for program modules may be executed within a local or distributed computer system.

The terms "system" and "device" are used interchangeably herein. Unless the context clearly indicates otherwise, neither term implies any limitation on a type of computer system or device. In general, a computer system or device can be local or distributed, and a computer system can include any combination of special-purpose hardware and/or hardware with software implementing the functionality described herein.

Numerous examples are described in this disclosure and are presented for illustrative purposes only. The described examples are not, and are not intended to be, limiting in any sense. The presently disclosed innovations are widely applicable to numerous contexts, as is readily apparent from the disclosure. One of ordinary skill in the art will recognize that the disclosed innovations may be practiced with various modifications and alterations, such as structural, logical, software, and electrical modifications. Although particular features of the disclosed innovations may be described with reference to one or more particular examples, it should be understood that such features are not limited to usage in the one or more particular examples with reference to which they are described, unless expressly specified otherwise. The present disclosure is neither a literal description of all examples nor a listing of features of the invention that must be present in all examples.

When an ordinal number (such as "first," "second," "third" and so on) is used as an adjective before a term, that ordinal number is used (unless expressly specified otherwise) merely to indicate a particular feature, such as to distinguish that particular feature from another feature that is described by the same term or by a similar term. The mere usage of the ordinal numbers "first," "second," "third," and so on does not indicate any physical order or location, any ordering in time, or any ranking in importance, quality, or otherwise. In addition, the mere usage of ordinal numbers does not define a numerical limit to the features identified with the ordinal numbers.

When introducing elements, the articles "a," "an," "the," and "said" are intended to mean that there are one or more of the elements. The terms "comprising," "including," and "having" are intended to be inclusive and mean that there may be additional elements other than the listed elements.

When a single device, component, module, or structure is described, multiple devices, components, modules, or structures (whether or not they cooperate) may instead be used in place of the single device, component, module, or structure. Functionality that is described as being possessed by a single device may instead be possessed by multiple devices, whether or not they cooperate. Similarly, where multiple devices, components, modules, or structures are described herein, whether or not they cooperate, a single device, component, module, or structure may instead be used in place of the multiple devices, components, modules, or structures. Functionality that is described as being possessed by multiple devices may instead be possessed by a single device. In general, a computer system or device can be local or distributed, and a computer system can include any combination of special-purpose hardware and/or hardware with software implementing the functionality described herein.

The respective techniques and tools described herein may be utilized independently and separately from other techniques and tools described herein.

Device, components, modules, or structures that are in communication with each other need not be in continuous communication with each other, unless expressly specified otherwise. On the contrary, such devices, components, modules, or structures need only transmit to each other as necessary or desirable, and they may actually refrain from exchanging data most of the time. For example, a device in communication with another device via the Internet might not transmit data to the other device for weeks at a time. In addition, devices, components, modules, or structures that are in communication with each other may communicate directly or indirectly through one or more intermediaries.

As used herein, the term "send" denotes any way of conveying information from one device, component, module, or structure to another device, component, module, or structure. The term "receive" denotes any way of getting information at one device, component, module, or structure from another device, component, module, or structure. The devices,

# EP 4 687 115 A1

components, modules, or structures can be part of the same computer system or different computer systems. Information can be passed by value (e.g., as a parameter of a message or function call) or passed by reference (e.g., in a buffer). Depending on context, information can be communicated directly or be conveyed through one or more intermediate devices, components, modules, or structures. As used herein, the term "connected" denotes an operable communication link between devices, components, modules, or structures, which can be part of the same computer system or different computer systems. The operable communication link can be a wired or wireless network connection, which can be direct or pass through one or more intermediaries (e.g., of a network).

As used herein, the term "set," when used as a noun to indicate a group of elements, indicates a non-empty group, unless context clearly indicates otherwise. That is, the "set" has one or more elements, unless context clearly indicates otherwise.

As used herein, the term "based on" or "based at least in part on" indicates a dependence. A value or output X that is "based on" (or "based at least in part on") a value or input Y depends on Y but can also depend on additional information or factors. Y can be directly or indirectly used when determining, assigning, generating, calculating, or creating X "based on" (or "based at least in part on") Y. Thus, for example, the language determining or assigning X "based on" Y can indicate determining or assigning X using Y.

A description of an example with several features does not imply that all or even any of such features are required. On the contrary, a variety of optional features are described to illustrate the wide variety of possible examples of the innovations described herein. Unless otherwise specified explicitly, no feature is essential or required.

Further, although process steps and stages may be described in a sequential order, such processes may be configured to work in different orders. Description of a specific sequence or order does not necessarily indicate a requirement that the steps or stages be performed in that order. Steps or stages may be performed in any order practical. Further, some steps or stages may be performed simultaneously despite being described or implied as occurring non-simultaneously. Description of a process as including multiple steps or stages does not imply that all, or even any, of the steps or stages are essential or required. Various other examples may omit some or all of the described steps or stages. Unless otherwise specified explicitly, no step or stage is essential or required. Similarly, although a product may be described as including multiple aspects, qualities, or characteristics, that does not mean that all of them are essential or required. Various other examples may omit some or all of the aspects, qualities, or characteristics.

An enumerated list of items does not imply that any or all of the items are mutually exclusive, unless expressly specified otherwise. Likewise, an enumerated list of items does not imply that any or all of the items are comprehensive of any category, unless expressly specified otherwise.

For the sake of presentation, the detailed description uses terms like "determine" and "select" to describe computer operations in a computer system. These terms denote operations performed by one or more processors or other components in the computer system, and these terms should not be confused with acts performed by a human being. The actual computer operations corresponding to these terms vary depending on implementation.

In the examples described herein, identical reference numbers in different figures indicate an identical component, module, or operation. More generally, various alternatives to the examples described herein are possible. For example, some of the methods described herein can be altered by changing the ordering of the method acts described, by splitting, repeating, or omitting certain method acts, etc. The various aspects of the disclosed technology can be used in combination or separately. Some of the innovations described herein address one or more of the problems noted in the background. Typically, a given technique or tool does not solve all such problems. It is to be understood that other examples may be utilized and that structural, logical, software, hardware, and electrical changes may be made without departing from the scope of the disclosure.

In view of the many possible embodiments to which the principles of the disclosed invention may be applied, it should be recognized that the illustrated embodiments are only preferred examples of the invention and should not be taken as limiting the scope of the invention. Rather, the scope of the invention is defined by the following claims. We therefore claim as our invention all that comes within the scope and spirit of these claims.

## Claims

1. A computing device comprising a processor system and memory, wherein the computing device implements a captioning tool configured to perform operations comprising:

    identifying (510) one or more representative units of video;
    ranking (520) the one or more representative units;
    based on results of the ranking the one or more representative units, selecting (540) a particular representative unit of the one or more representative units;
    providing (550), as input to a vision language model, VLM, the particular representative unit; and

20

receiving (580), as output from the VLM, a text caption for the particular representative unit.

2. The computing device of claim 1, wherein the identifying the one or more representative units includes:

identifying a scene of the video, the scene including multiple units; and
determining the one or more representative units among the multiple units of the scene.

3. The computing device of claim 2, wherein the identifying the scene of the video:

uses a machine learning model configured for scene change detection; or
uses metadata in a bitstream.

4. The computing device of claim 2, wherein each of the one or more representative units is a keyframe of the video.

5. The computing device of claim 2, wherein the determining the one or more representative units is based on quality properties of the multiple units, respectively, of the scene, the quality properties including contrast level and stability of content compared to surrounding units.

6. The computing device of any one of claims 1 to 5, wherein the ranking includes, for each of the one or more representative units:

detecting objects, if any, in the representative unit; and
determining a count and/or quality of the one or more detected objects.

7. The computing device of any one of claims 1 to 5, wherein the ranking includes, for each of the one or more representative units:
determining a quality metric for the representative unit, wherein the quality metric incorporates at least one of clarity of objects in the representative unit, prominence of objects in foreground of the representative unit, and quality of framing of objects in the representative unit.

8. The computing device of any one of claims 1 to 7, wherein the VLM use an architecture with a mixture of expert models, and wherein each of the expert models is a different constituent VLM.

9. The computing device of any one of claims 1 to 8, wherein the VLM is configured to perform operations comprising:

accepting, at a text encoder of the VLM, a text prompt;
producing, with the text encoder of the VLM, tokens that encode the text prompt;
accepting, at a visual encoder of the VLM, the particular representative unit;
producing, with the visual encoder of the VLM, tokens that encode the particular representative unit;
accepting, at a text decoder of the VLM, the tokens that encode the text prompt and the tokens that encode the particular representative unit; and
producing, with the text decoder of the VLM, the text caption for the particular representative unit using the tokens that encode the text prompt and the tokens that encode the particular representative unit.

10. The computing device of claim 9, wherein the producing the text caption includes multiple iterations of output token generation, and wherein a probability of an end-of-sentence token increases in successive iterations of the multiple iterations of output token generation.

11. The computing device of any one of claims 1 to 10, wherein the operations further comprise, for each of multiple additional units among the one or more representative units, repeating the selecting, the providing, and the receiving.

12. The computing device of any one of claims 1 to 11, wherein the operations further comprise:

storing the text caption; and
using the text caption in indexing of the video, summarization of the video, semantic search across the video, or determining a recommendation for the video.

13. The computing device of any one of claims 1 to 11, wherein the VLM has been trained in a training process comprising:

receiving an initial training set comprising images and initial text captions, each of the initial text captions being associated with an image among the images;

updating the initial training set, including distilling the initial text captions into final text captions, wherein a given final text caption among the final text captions is:

generated using a corresponding initial text caption among the initial text captions;

more concise than the corresponding initial text caption; and

associated with the image that is associated with the corresponding initial text caption; and

adjusting the VLM using the updated training set.

14. In a computing device that implements a captioning tool, a method comprising:

identifying (510) one or more representative units of video;

ranking (520) the one or more representative units;

based on results of the ranking the one or more representative units, selecting (540) a particular representative unit of the one or more representative units;

providing (550), as input to a vision language model, VLM, the particular representative unit; and

receiving (580), as output from the VLM, a text caption for the particular representative unit.

15. One or more computer-readable media having stored therein computer-executable instructions for causing a processor system, when programmed thereby, to perform operations comprising:

identifying (510) one or more representative units of video;

ranking (520) the one or more representative units;

based on results of the ranking the one or more representative units, selecting (540) a particular representative unit of the one or more representative units;

providing (550), as input to a vision language model, VLM, the particular representative unit; and

receiving (580), as output from the VLM, a text caption for the particular representative unit.

# FIG. 1

fine-tuning a vision language model

# FIG. 2

inference using a trained vision language model

# FIG. 3a  300

```
        ┌─────────┐
        │  Start  │
        └────┬────┘
             │
310          ▼
┌───────────────────────────────┐
│ Receive an initial training set with │
│ images and initial text captions. │
└───────────────┬───────────────┘
                │
320             ▼
┌───────────────────────────────┐
│   Update the initial training set, │
│   including distilling the initial │
│   text captions into final text │
│          captions.            │
└───────────────┬───────────────┘
                │
330             ▼
┌───────────────────────────────┐
│      Adjust the VLM using      │
│     the updated training set.   │
└───────────────┬───────────────┘
                │
                ▼
        ┌─────────┐
        │   End   │
        └─────────┘
```

# FIG. 3b  321 (example of 320)

```
                 ┌─────────┐
                 │  Start  │
                 └────┬────┘
322                   │
        ◇─────────────▼─────────────◇   no   ┌────────┐
        │   Process another caption?  ├──────▶│  End   │
        ◇─────────────┬─────────────◇        └────────┘
323                  yes
┌───────────────────────────────┐
│   Provide, as input to LLM (or │
│    VLM), initial text caption.  │
└───────────────┬───────────────┘
324             ▼
┌ ─ ─ ─ ─ ─ ─ ─ ─ ─ ─ ─ ─ ─ ─ ─ ┐
   Provide, as input to VLM, image
│  associated with initial text caption. │
└ ─ ─ ─ ─ ─ ─ ─ ┬ ─ ─ ─ ─ ─ ─ ─ ┘
325             ▼
┌───────────────────────────────┐
│    Provide, as input to LLM (or │
│   VLM) instruction to shorten and │
│  summarize the initial text caption. │
└───────────────┬───────────────┘
326             ▼
┌───────────────────────────────┐
│   Receive, as output from LLM (or │
│       VLM), final text caption.  │
└───────────────────────────────┘
```

EP 4 687 115 A1

# FIG. 3c

331 (example of 330)

Start

332

Next in batch? — no → End

yes

333

With VLM, generate test text caption based on image associated with final text caption.

334

Determine feedback based at least in part on differences between given final text caption and test text caption.

335

Aggregate feedback.

336

Adjust parameters of text decoder of VLM based at least in part on the (aggregated) feedback.

# FIG. 4a
400

Start

410

Accept, at generative AI model, input.

420

Produce, with generative AI model, input tokens that encode the input.

430

Produce, with generative model, a text response using the input tokens, where probability of EOS token increases in successive iterations among multiple iterations of output token generation.

End

# FIG. 4b
431 (example of 430)

Start

432

Increase probability of EOS token.

433

Produce output token(s), where each of the output token(s) is the EOS token or a text token representing word(s).

434

EOS token produced?

no

yes

End

# FIG. 5a  500

Start

**510**
ID representative unit(s) of video.

**520**
Rank the representative unit(s).

**530**
Caption another unit? — no

yes

**540**
Based on results of the ranking, select a particular representative unit of the representative unit(s).

**550**
Provide, as input to VLM, the selected (particular representative) unit.

**580**
Receive, as output from the VLM, a text caption for the selected unit.

**590**
Next scene?

yes

no

End

# FIG. 5b  570

Start

**571**
Accept, at text encoder, a text prompt.

**572**
Produce, with text encoder, tokens that encode the text prompt.

**573**
Accept, at visual encoder, the selected (particular repr.) unit.

**574**
Produce, with visual encoder, tokens that encode the selected unit.

**575**
Accept, at ML model, the tokens that encode the text prompt and the tokens that encode the selected unit.

**576**
Produce, with ML model, the text caption for the selected unit.

End

# FIG. 6

computer system 600

CPU(s) 610

processing core 611 . . . processing core 61x

⇕ fast transfers ⇕

on-chip memory 618 (caches)

s/w

slow transfers

main memory 620

network interface device(s) 640

motion sensor/ tracker input 642

game controller input 644

media player 646

video source 648

GPU(s) or NPU(s) 630

processing core 631 . . . processing core 63x

⇕ fast transfers ⇕

memory 638

s/w

slow transfers

audio source 650

audio / video output 660

s/w

s/w storage 670

software 680 implementing one or more innovations for controlling complexity of captioning that uses a vision language model

| | EUROPEAN SEARCH REPORT | Application Number |
|---|---|---|
| Europäisches Patentamt / European Patent Office / Office européen des brevets | | EP 25 19 2529 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NURYE DESALE F ET AL: "Efficient visual information indexation for supporting actionable intelligence and knowledge generation", 20231017, vol. 12742, 17 October 2023 (2023-10-17), pages 1274207-1274207, XP060192012, ISSN: 0277-786X, DOI: 10.1117/12.2680257 ISBN: 978-1-5106-6713-6 | 1-4,11, 12,14,15 | INV. G06V10/774 G06V10/82 G06V20/40 G06V10/776 G06V20/70 |
| Y A | * figure 1, page 4, 2nd paragraph; section 3, 1st paragraph and section 3.2, last paragraph; section 3.1 * ----- | 5,7-10 13 | |
| X | VAISHNAVI HIMAKUNTHALA ET AL: "Let's Think Frame by Frame with VIP: A Video Infilling and Prediction Dataset for Evaluating Video Chain-of-Thought", ARXIV.ORG, CORNELL UNIVERSITY LIBRARY, 201 OLIN LIBRARY CORNELL UNIVERSITY ITHACA, NY 14853, 3 November 2023 (2023-11-03), XP091652075, | 1-5,11, 12,14,15 | |
| Y A | * figure 1, subfigures 1 and 2, see also figure 4, sections 3.1 and 3.2; page 4 bottom paragraph * & Anonymous: "Understanding katna - Katna documentation", , 10 July 2024 (2024-07-10), XP093310340, Retrieved from the Internet: URL:https://web.archive.org/web/2024071019 3925/https://katna.readthedocs.io/en/lates t/understanding_katna.html [retrieved on 2025-09-03] * page 2, top; section bridging pages 1 and 2 * ----- -/-- | 5-10 13 | TECHNICAL FIELDS SEARCHED (IPC) G06V |

The present search report has been drawn up for all claims

| Place of search | Date of completion of the search | Examiner |
|---|---|---|
| The Hague | 27 November 2025 | Loza, Artur |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 3

**EUROPEAN SEARCH REPORT**

Application Number

EP 25 19 2529

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Anonymous: "Detecting video segments in stored video - Amazon Rekognition", , 6 March 2024 (2024-03-06), XP093310343, Retrieved from the Internet: URL:https://web.archive.org/web/2024030622 3020/https://docs.aws.amazon.com/rekogniti on/latest/dg/segments.html [retrieved on 2025-09-03] * pages 4-5 * ----- | 3,13 | |
| A | FAHAD DANIYAL ET AL: "Content and task-based view selection from multiple video streams", MULTIMEDIA TOOLS AND APPLICATIONS, KLUWER ACADEMIC PUBLISHERS, BO, vol. 46, no. 2-3, 24 September 2009 (2009-09-24), pages 235-258, XP019773164, ISSN: 1573-7721 * pages 4-5 * ----- | 3 | |
| Y | XIANGHUI XIE ET AL: "Visibility Aware Human-Object Interaction Tracking from Single RGB Camera", ARXIV.ORG, CORNELL UNIVERSITY LIBRARY, 201 OLIN LIBRARY CORNELL UNIVERSITY ITHACA, NY 14853, 31 October 2023 (2023-10-31), XP091647965, * section 6.2 * ----- | 6 | |
| Y | BIN LIN ET AL: "MoE-LLaVA: Mixture of Experts for Large Vision-Language Models", ARXIV.ORG, CORNELL UNIVERSITY LIBRARY, 201 OLIN LIBRARY CORNELL UNIVERSITY ITHACA, NY 14853, 6 July 2024 (2024-07-06), XP091809601, | 8 | |
| A | * figure 2 * ----- | 13 | |

TECHNICAL FIELDS SEARCHED (IPC)

-/--

The present search report has been drawn up for all claims

| Place of search | Date of completion of the search | Examiner |
|---|---|---|
| The Hague | 27 November 2025 | Loza, Artur |

Europäisches
Patentamt

European
Patent Office

Office européen
des brevets

# EUROPEAN SEARCH REPORT

**Application Number**

EP 25 19 2529

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | YUHANG ZANG ET AL: "Contextual Object Detection with Multimodal Large Language Models", ARXIV.ORG, CORNELL UNIVERSITY LIBRARY, 201 OLIN LIBRARY CORNELL UNIVERSITY ITHACA, NY 14853, 29 May 2023 (2023-05-29), XP091522799, | 9 | |
| A | * figure 2(b) * | 13 | |
| | ----- | | |
| Y | US 2018/260698 A1 (LIN ZHE [US] ET AL) 13 September 2018 (2018-09-13) * paragraphs 79-83 * | 10 | |
| | ----- | | |
| A | TIANYI BAI ET AL: "A Survey of Multimodal Large Language Model from A Data-centric Perspective", ARXIV.ORG, CORNELL UNIVERSITY LIBRARY, 201 OLIN LIBRARY CORNELL UNIVERSITY ITHACA, NY 14853, 18 July 2024 (2024-07-18), XP091820496, * sections 3.2.1-3.2.3, 5.1 * | 13 | |
| | ----- | | TECHNICAL FIELDS SEARCHED (IPC) |
| A | WU JIAYANG ET AL: "Multimodal Large Language Models: A Survey", 2023 IEEE INTERNATIONAL CONFERENCE ON BIG DATA (BIGDATA), IEEE, 15 December 2023 (2023-12-15), pages 2247-2256, XP034520646, DOI: 10.1109/BIGDATA59044.2023.10386743 [retrieved on 2024-01-22] * section IV.B * | 13 | |
| | ----- | | |

The present search report has been drawn up for all claims

| Place of search | Date of completion of the search | Examiner |
|---|---|---|
| The Hague | 27 November 2025 | Loza, Artur |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

        .................................................................................

& : member of the same patent family, corresponding document

EPO FORM 1503 03.82 (P04C01)

Europäisches
Patentamt

European
Patent Office

Office européen
des brevets

Application Number

EP 25 19 2529

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

   see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**

**SHEET B**

Application Number

EP 25 19 2529

The Search Division considers that the present European patent application does not comply with the requirements of unity of invention and relates to several inventions or groups of inventions, namely:

1. claims: 1-5, 11, 12, 14, 15

    how to identify representative units of a video

1.1. claim: 11

    how to process multiple video segments for captioning

1.2. claim: 12

    how to utilise the outputs of video captioning
                        ---

2. claims: 6, 7

    how to perform ranking of representative units of a video
                        ---

3. claims: 8-10, 13

    provision of a VLM for concise text caption generation
                        ---

Please note that all inventions mentioned under item 1, although not necessarily linked by a common inventive concept, could be searched without effort justifying an additional fee.

## ANNEX TO THE EUROPEAN SEARCH REPORT
## ON EUROPEAN PATENT APPLICATION NO.

EP 25 19 2529

This annex lists the patent family members relating to the patent documents cited in the above-mentioned European search report.
The members are as contained in the European Patent Office EDP file on
The European Patent Office is in no way liable for these particulars which are merely given for the purpose of information.

27-11-2025

| Patent document cited in search report | Publication date | Patent family member(s) | Publication date |
|---|---|---|---|
| US 2018260698 A1 | 13-09-2018 | US 2018260698 A1<br>US 2019332937 A1 | 13-09-2018<br>31-10-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LIN et al.** *MoE-LLaVA: Mixture of Experts for Large Vision-Language Models*, 2024
- **RADFORD et al.** *Learning Transferable Visual Models From Natural Language Supervision*, 2021
- **ALAYRAC et al.** *Flamingo: a Visual Language Model for Few-Shot Learning*, 2022
- **WANG et al.** *SIMVLM: Simple Visual Language Model Pre-Training with Weak Supervision*, 2022
- **CHEN et al.** *VisualGPT: Data-Efficient Adaptation of Pretrained Language Models for Image Captioning*, 2022
- **LU et al.** *ViLBERT: Pretraining Task-Agnostic Visiolinguistic Representations for Vision-and-Language Tasks*, 2019
- **GU et al.** *Open-Vocabulary Object Detection Via Vision and Language Knowledge Distillation*, 2022
- **VEDANTAM et al.** *CIDEr: Consensus-Based Image Description Evaluation*, 2015
- **PAPINENI et al.** *BLEU: a Method for Automatic Evaluation of Machine Translation*, 2002
- **LIN**. *ROUGE: A Package for Automatic Evaluation of Summaries*, 2004
- **BANERJEE et al.** *METEOR: An Automatic Metric for MT Evaluation with Improved Correlation with Human Judgments*, 2005
- **RADFORD et al.** *Language Models Are Unsupervised Multitask Learners*, 2019
- **HUA et al.** *Optimization-Based Automated Home Video Editing System*, 2004